# FASCICULE DE BREVET EUROPEEN

(11) **EP 4 312 511 B1**
(45) Date de publication et mention de la délivrance du brevet: **04.06.2025**
(21) Numéro de dépôt: 22717434.9
(22) Date de dépôt: 04.04.2022
(51) Int. Cl.: A01G 13/02

(54) **INSTALLATION DE PROTECTION DE PLANTES CULTIVEES EN RANG**
VORRICHTUNG ZUM SCHUTZ VON IN REIHENKULTUREN
APPARATUS FOR PROTECTING PLANTS CULTIVATED IN ROWS

(30) Priorité: 03.04.2021 FR 2103465; 01.12.2021 FR 2112810
(43) Date de publication de la demande: 07.02.2024
(73) Titulaire: Innoba, 47320 Clairac (Toulouse) (FR)
(72) Inventeur: BARRE, André, 47320 CLAIRAC (FR)
(74) Mandataire: Bringer IP
(86) Numéro de dépôt international: PCT/IB2022/053116
(87) Numéro de publication internationale: WO 2022/208483

(56) Documents cités:
- EP-A1- 3 248 455
- FR-A1- 3 068 568

## Description

### Domaine technique

La présente invention est du domaine des matériels utilisés pour protéger des intempéries et des gelées les plantes cultivées en rang telles que vignes, arbres fruitiers et autres, et concerne plus particulièrement une installation de protection de ces plantes, pourvue d'un élément de protection souple pouvant être disposé selon un état replié ou selon un état déployé au-dessus d'un rang de plantes, au-dessus et éventuellement de part et d'autre de ce rang de plantes.

### État de la technique antérieure

On a cherché par le passé à protéger les plantes en ranget notamment la vigne.

Ainsi, on connaît du brevet FR 443 840 une installation de protection de la vigne contre la gelée comprenant des bandes de toile suspendues de manière glissante par des anneaux à des fils latéraux horizontaux portés par des pieux enfoncés dans le sol. En position de protection, les bandes de toile se trouvent déployées au-dessus d'un rang tandis qu'en position repliée, elles sont disposées de manière rassemblée sur elles-mêmes à l'une des extrémités du rang. Une telle installation peut être utilisée dans une certaine mesure pour la protection de la vigne contre la grêle et autres intempéries, bien que l'impossibilité d'évacuer les accumulats qui peuvent se former sur les bandes de toile et les détériorer sous l'effet de leur poids en limite l'utilisation à la seule protection thermique.

Le brevet US 593654 montre une installation de protection de la vigne constituée des structures rigides en V portées au-dessus d'un rang de vigne par des supports verticaux fixés aux poteaux de palissage. Les structures en V supportent une couverture imperméable lestée, fixée à un arbre d'enroulement porté par les supports verticaux.

Le document FR 2 724 815 montre un dispositif de protection et de régulation thermique de la vigne palissée, formé essentiellement d'une feuille de matière plastique étendue au-dessus d'un rang de plants de vigne, cette feuille prenant appui sur des fils de palissage et de haubanage afin de former autour du rang, un tunnel de protection apte à créer un effet de serre. La feuille est retirée manuellement en période de frondaison et remise en place manuellement lorsque le risque de grêle et plus généralement de fortes intempéries devient important. Il est évident que ces opérations de pose et dépose manuelles de la feuille de protection, sont longues et fastidieuses.

On connaît du brevet EP 3 248 455 un dispositif de protection des plantes en rang comprenant une série de poteaux verticaux alignés, portant des bras pivotants formant ossature de soutien, ces bras étant montés de manière mobile entre une position de protection selon laquelle ils sont inclinés vers le bas et une position de repliement selon laquelle ils sont verticaux et s'étendent en majeure partie au-dessus des poteaux verticaux. Ces poteaux verticaux portent à leur sommet un longeron sommital commun, sous forme de profilé creux formant un logement longitudinal accueillant de manière libre en rotation un axe d'enroulement de deux couvertures de protection, gauche et droite, prévues pour venir, en position de protection, prendre appui sur les bras de soutien et recouvrir en position de protection, le rang de plantes. Ces couvertures sont engagées toutes deux dans une ouverture longitudinale supérieure, sous forme de fente, pratiquée dans la paroi du longeron sommital. Les couvertures sont équipées le long de leur bord longitudinal externe de lisses longitudinales rigides prévues pour venir coopérer en guidage et entraînement avec les bras pivotants. À cet effet, chaque bras pivotant est équipé d'un crochet prévu pour accueillir la lisse de la couverture correspondante. Par manœuvre de l'axe d'enroulement dans le sens de l'enroulement, les couvertures glissent sur les bras, ces derniers étant en position de protection. Lors de ce mouvement d'enroulement, les lisses s'engagent dans les crochets formés sur les bras et entraînent ces derniers vers leur position de repliement. Depuis cette position, le mouvement inverse de l'axe d'enroulement s'accompagne du mouvement angulaire des bras vers leur position de protection et une fois cette position atteinte, du mouvement de glissement des couvertures sur ces bras. La longueur des couvertures est telle qu'elles peuvent descendre jusqu'au sol afin de former latéralement au rang de plantes une barrière de protection. La manœuvre de l'axe d'enroulement est assurée par un moteur électrique.

L'inconvénient de la disposition précédente réside essentiellement dans le fait que les couvertures, en position de protection, ne sont maintenues sur les bras que sous l'effet du poids des lisses longitudinales rigides et sont soumises de ce fait à flottement et retournement sous l'effet du vent de sorte que la protection qu'elles forment peut se trouver anéantie. De plus, le déploiement des deux couvertures peut être freiné ou rendu impossible par la présence de salissures dans le logement que présente le longeron sommital. En outre, en position repliée, les couvertures ne sont pas totalement logées dans le longeron sommital et forment au-dessus de ce longeron deux prises au vent.

On connaît également du FR 3 068 568 un abri pour la culture des végétaux comprenant deux pans de toiture articulés à une rangée de poteau, chaque pan de toiture étant formé d'une ossature sur laquelle est tendue une couverture de protection étanche. Aucun moyen n'est prévu pour replier la couverture sur elle-même en zone sommitale.

Enfin, la plupart des installations de l'art antérieur, n'offrent pas la possibilité d'un recouvrement rapide des plantes en rang lors de la survenue des intempéries.

### Exposé de l'invention

La présente invention a pour objet de résoudre les inconvénients précédemment cités, en proposant une installation de protection de plantes en rang d'une conception simple, d'un coût moindre, et d'une utilisation particulièrement fiable. Un autre but de la présente invention est une installation dont le recouvrement des plantes en rang est effectué d'une manière rapide afin d'offrir une protection optimale.

A cet effet, l'installation de protection des plantes en rang selon l'invention telle que défini par la revendication 1 comprend
- des poteaux verticaux alignés en au moins une rangée, prévus pour être enfichés dans le sol, comportant chacun une zone supérieure prévue pour être situés au-dessus de la canopée des plantes,
- une ossature solidaire de la zone supérieure des poteaux, pouvant adopter à la commande une position rétractée ou une position déployée transversalement perpendiculaire à la rangée des poteaux, ladite ossature comportant des modules d'ossature chacun porté par un poteau et comprenant au moins un bras de déploiement solidarisé au poteau correspondant par sa zone proximale de manière angulairement mobile, entre une position verticale et orientée vers le haut correspondant à la position rétractée de l'ossature, et une position horizontale ou inclinée par rapport au sol correspondant à la position déployée de l'ossature, ladite ossature comportant en outre au moins un élément longiforme latéral fixé à la zone distale du ou de l'un des bras de déploiement de chaque module d'ossature, ledit au moins un élément longiforme latéral s'étendant parallèlement à la rangée des poteaux et au sol,
- une couverture de protection souple présentant une face supérieure et une face inférieure, ladite couverture de protection étant portée par l'ossature et pouvant occuper :
- par déploiement de l'ossature, une position dépliée dans laquelle elle s'étend au-dessus des plantes et forme un écran protecteur,
- par rétractation de l'ossature, une position repliée au-dessus de la zone sommitale du rang de plantes,
- un moyen de manœuvre de l'ossature entre les positions déployée et rétractée et de maintien de cette dernière dans l'une ou l'autre position ou dans une position intermédiaire.

Cette installation se caractérise essentiellement en ce que chaque module d'ossature comprend une tête de guidage prévue pour le guidage du moyen de manœuvre, ladite tête étant fixée au poteau vertical correspondant, au-dessus et à distance de l'extrémité proximale du ou de chaque bras de déploiement et que le ou chaque bras de déploiement de chaque module d'ossature est sollicité vers la position de déploiement de l'ossature par des forces élastiques de rappel. Une telle disposition est de nature à faciliter et accélérer le déploiement de l'ossature et de la couverture. En outre, cette disposition confère à l'ossature une certaine souplesse grâce à quoi les bras peuvent ployer élastiquement, sous l'effet des impacts des rafales de vent sur la couverture et absorber ces impacts sans pour autant se détériorer et sans pour autant les transmettre aux autres éléments rigides de l'ossature. De cette manière, l'installation se trouve protégée.

De cette manière, les forces élastiques génèreront ou aideront au déploiement de l'ossature et de la couverture dans un intervalle de temps suffisamment bref pour éviter tout dommage aux cultures lors de la survenue d'intempéries et notamment de la grêle.

Selon une autre caractéristique de l'invention, le moyen de manœuvre de l'ossature est apte à assurer un repliement lent de l'ossature et de la couverture de protection et un déploiement rapide de ces dernières.

Selon une autre caractéristique de l'invention, les forces élastiques de rappel sont internes au ou à chaque bras de déploiement, ce dernier étant constitué à partir d'un élément longiforme élastique de préférence en acier à haute limite élastique. Est évité ainsi l'usage d'éléments de rappel annexes de nature à renchérir le coût de l'installation.

Selon une autre caractéristique de l'invention, la zone proximale du ou de chaque bras de déploiement est agencée en ressort. Cette disposition est de nature à faciliter le déploiement de l'ossature et de la couverture.

Selon une autre caractéristique de l'invention, la zone proximale du ou de chaque bras de déploiement est agencée en ressort spiral à spires non jointives. Une telle disposition ne contraint pas l'extrémité du bras sur une trajectoire circulaire imposée, au contraire elle permet de légers déplacements du bras par rapport à cette trajectoire.

Selon une autre caractéristique de l'invention, le moyen de manœuvre de l'ossature comprend un arbre d'enroulement motorisé sur lequel s'enroule la couverture de protection, et la tête de guidage de chaque module d'ossature est dotée d'au moins un moyen de palier supportant le rouleau formé par l'arbre d'enroulement et la partie enroulée, sur cet arbre, de la couverture de protection, cette dernière par l'une au moins de ses deux bordures longitudinales est fixée à un élément longiforme latéral et à des profilés de liaison, ledit arbre d'enroulement étant accouplé à un moyen moteur d'entraînement en rotation.

Selon une autre caractéristique de l'installation selon l'invention,
- chaque module d'ossature comprend au moins une paire de bras de déploiement formée d'un bras de déploiement gauche et d'un bras de déploiement droit, opposés, se développant tous deux dans un plan géométrique transversal perpendiculaire à la rangée de poteaux,
- chaque bras de déploiement est solidarisé à un profilé de liaison,
- l'ossature comprend deux éléments longiformes latéraux droit et gauche,
- la couverture de protection est fixée par sa zone médiane longitudinale à l'arbre d'enroulement et par ses bordures longitudinales droite et gauche respectivement aux éléments longiformes latéraux droit et gauche ainsi qu'aux profilés de liaison, ladite couverture de protection formant au-dessus du rang de plantes, lorsqu'elle est déployée, deux pans de couverture, opposés.

Selon une autre caractéristique de l'invention, la couverture de protection est segmentée, que chaque segment de couverture est adapté à couvrir une travée, c'est à dire la distance entre deux poteaux consécutifs et que l'arbre d'enroulement est formé de tronçons d'arbre accouplés les uns aux autres au niveau des moyens de palier par des organes d'accouplement, chaque organe d'accouplement s'étendant au travers du moyen de palier qui l'accueille et que chaque tronçon d'arbre reçoit un segment de couverture et forme avec ce dernier un tronçon de rouleau d'enroulement amovible, pouvant être préfabriqué.

Selon une autre caractéristique de l'installation selon l'invention, dans l'intervalle entre deux travées successives est disposé au moins un moyen d'étanchéité enroulable, s'opposant à l'introduction d'eau de pluie au travers dudit intervalle lorsque la couverture de protection est déployée en partie ou en totalité.

Selon une autre caractéristique de l'installation selon l'invention, les tronçons d'arbre associés à un même moyen de palier sont axialement écartés de ce moyen de palier et chaque moyen d'étanchéité est formé de deux paires de bavettes d'étanchéité couvrant pour l'une l'intervalle entre deux les deux pans gauches adjacents de couverture de protection et pour l'autre les deux pans droits en étant recouvertes en partie par les dits pans tout en étant au contact des faces inférieures de ces derniers, chaque bavette (étant fixée d'une part à l'organe d'accouplement associé audit moyen de palier et d'autre part au profilé de liaison correspondant.

Selon une autre caractéristique de l'installation selon l'invention, chaque paire de bavette d'étanchéité est associée à un élément de resserrement, dédié, apte à maintenir les deux bavettes par leur bord en vis à vis de leur partie déroulée, rapprochées l'une de l'autre et dans une relation de coplanarité, et ce par action sur leur ou l'un de leur bord opposé et sur leurs faces supérieure et inférieure.

Selon une autre caractéristique de l'installation selon l'invention, chaque moyen d'étanchéité comporte sous chaque paire de bavette d'étanchéité et au droit de l'interstice entre les deux bavettes de ladite paire, une bavette de liaison, d'étanchéité, s'étendant entre le moyen de palier et le profilé de liaison correspondant, ladite bavette étant portée par l'élément de resserrement.

Selon une autre caractéristique de l'installation selon l'invention, l'arbre d'enroulement est tubulaire, est prolongé axialement par une forme d'axe d'accouplement, tubulaire, par laquelle il est accouplé au moyen moteur d'entraînement en rotation.

Selon une autre caractéristique de l'installation selon l'invention :
- la couverture de protection est fixée à l'arbre d'enroulement par des rivets creux, formant buses de distribution, engagés dans des perçages traversants pratiqués dans l'une des parois longitudinales de l'arbre d'enroulement,
- l'arbre d'enroulement et la forme d'axe d'accouplement reçoivent dans leur volume interne un élément d'alimentation des buses en poudre, cet élément d'alimentation sous forme hélicoïdale, présentant une succession de spires non jointives de mêmes diamètres,
- l'élément d'alimentation est accouplé à un organe moteur dédié monté en extrémité de la forme d'axe d'accouplement,
- le volume interne de l'arbre d'enroulement et de la forme d'axe d'accouplement est prévu pour être en relation de communication avec un réservoir de poudre.

### Bref exposé des figures

[Fig.1] est une vue de face de l'installation selon une première forme de réalisation, dans son état déployé.

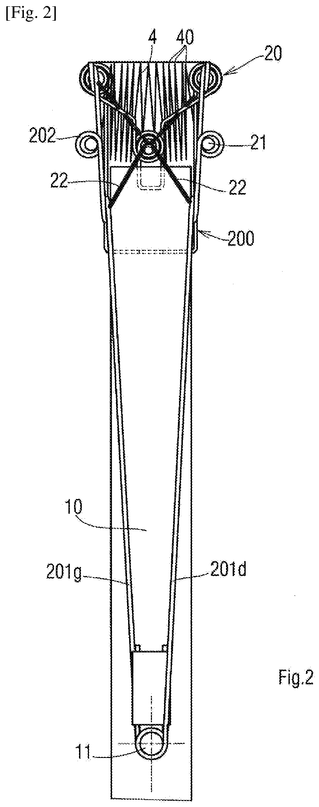

[Fig.2] est une vue de face de l'installation selon sa première forme de réalisation, dans son état replié, la partie inférieure des poteaux n'étant pas représentée sur cette figure.

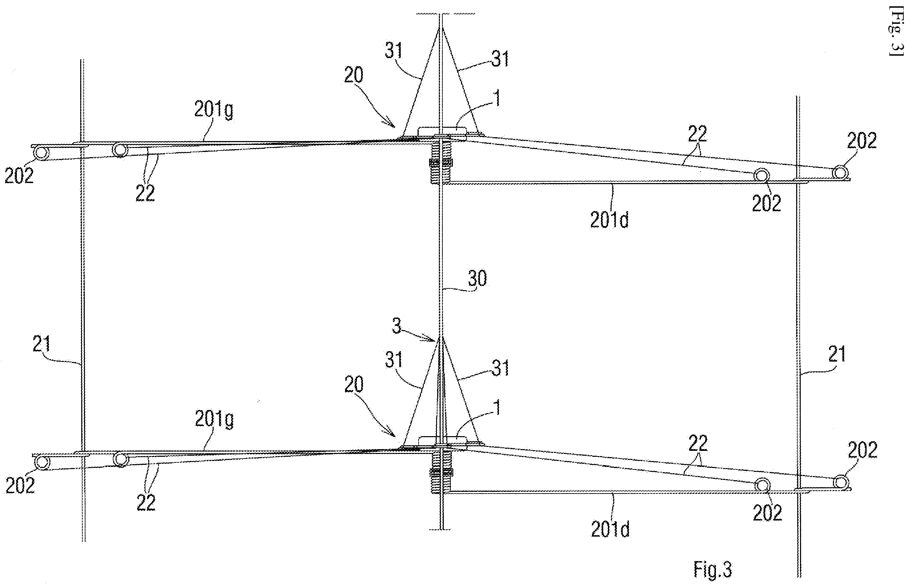

[Fig.3] est une vue de dessus, de l'installation selon sa première forme de réalisation, dans son état déployé, la couverture de protection n'étant pas représentée.
[Fig.4] est une vue de face de la tête de guidage que comporte chaque module d'ossature de l'installation selon sa première forme de réalisation.
[Fig.5] est une vue en perspective de l'un des bras de déploiement équipant l'installation selon sa première forme de réalisation.
[Fig.6] est une vue en perspective de l'installation selon une seconde forme de réalisation, dans son état déployé.

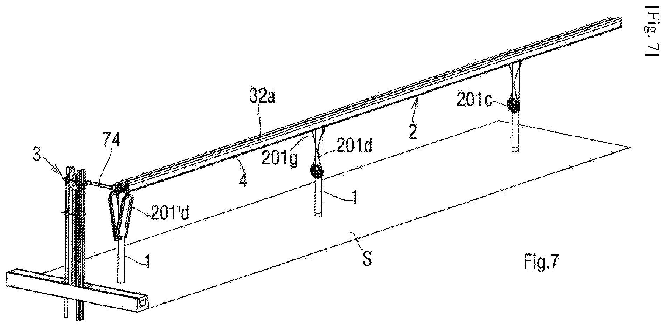

[Fig.7] est une vue en perspective de l'installation selon la seconde forme de réalisation.
[Fig.8] est une vue de face de l'installation selon la seconde forme de réalisation.
[Fig.9] est une vue en perspective d'un dispositif anti-soulèvement.

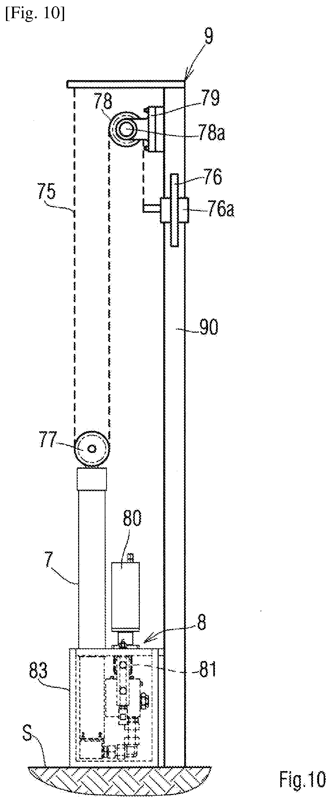

[Fig.10] est une vue montrant une seconde forme de réalisation des moyens de transmission de mouvement entre le vérin et l'arbre d'enroulement de l'installation selon la seconde forme de réalisation, ces moyens de transmission étant dans un état correspondant à la position repliée de l'ossature et de la couverture de protection.

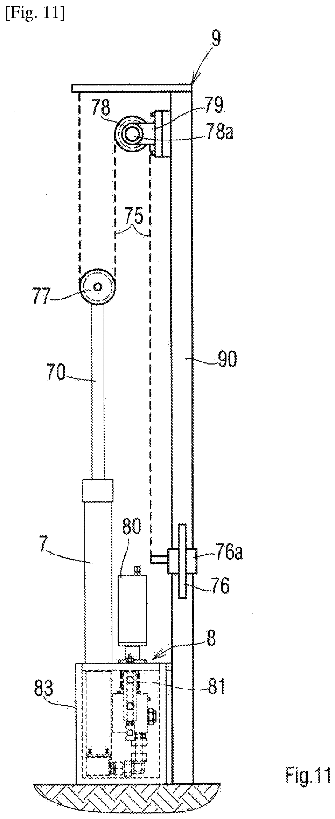

[Fig.11] est une vue montrant une seconde forme de réalisation des moyens de transmission de mouvement entre le vérin et l'arbre d'enroulement de l'installation selon la seconde forme de réalisation, ces moyens de transmission étant dans un état correspondant à la position déployée de l'ossature et de la couverture de protection.

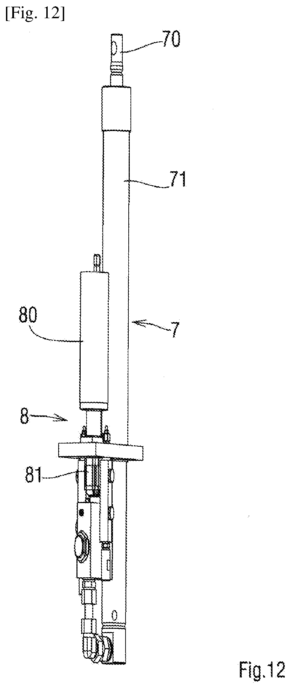

[Fig.12] est une vue en perspective du vérin et du groupe motopompe associé équipant l'installation selon la seconde forme de réalisation.

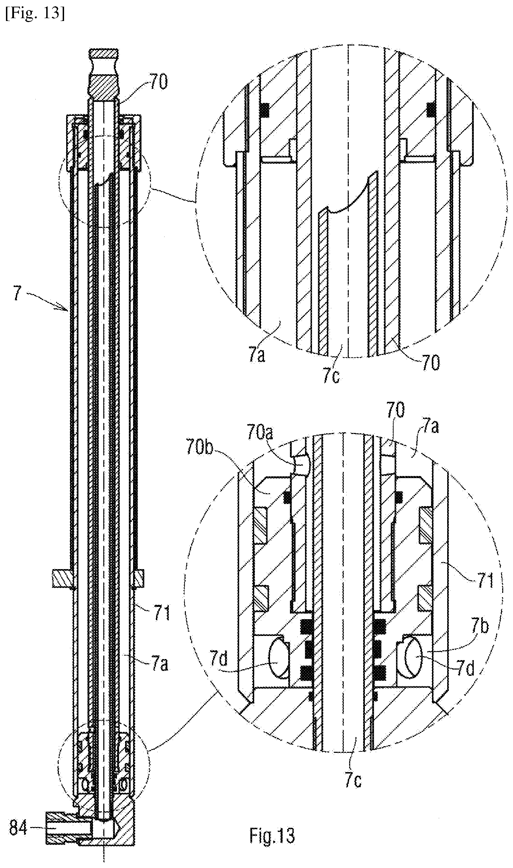

[Fig.13] est une vue en coupe longitudinale du vérin équipant l'installation selon la seconde forme de réalisation.
[Fig.14] est une vue schématique des moyens hydrauliques associés au vérin équipant l'installation selon la seconde forme de réalisation.
[Fig.15] est une vue de face d'une variante de réalisation d'un poteau vertical.
[Fig.16] est une vue en coupe selon la ligne AA de la [Fig.15].
[Fig.17] est une vue de face d'un organe d'ancrage.
[Fig.18] est une vue de dessus de l'organe d'ancrage selon la [Fig.17].
[Fig.19] est une vue de profil de l'organe d'ancrage assujetti à son poteau.
[Fig.20] est une vue partielle d'une installation présentant des goulottes latérales.
[Fig.21] est une vue de détail de la couverture de protection montrant un mode de fixation de cette dernière à l'élément longiforme latéral.
[Fig.22] est une vue en coupe montrant le montage d'un bras de déploiement selon une autre forme de réalisation, dans un profilé de liaison auquel est fixée par des clés de blocage la couverture de protection.
[Fig.23] est une vue de dessus de la [Fig.22], la couverture et les clés de blocage n'étant représentées sur cette figure.
[Fig.24] est une vue schématique des moyens de distribution de produits phytosanitaires et d'entraînement de l'arbre d'enroulement.
[Fig.24a] est une vue schématique montrant un mécanisme d'actionnement de fin de course associé à l'arbre d'enroulement.
[Fig.25] est une vue schématique de détail des moyens de distribution de produits phytosanitaires.
[Fig.26] est une vue montrant la liaison entre deux tronçons d'arbre d'enroulement.
[Fig.27] est une vue de face d'un moyen de palier selon une deuxième forme de réalisation.
[Fig.28] est une vue de profil du moyen de palier selon la seconde forme de réalisation, l'arbre d'enroulement et la couverture ne sont pas représentés sur cette figure.
[Fig.29] est une vue de face d'une installation selon une autre forme de réalisation.
[Fig.30] est une vue de face d'un moyen de palier selon une troisième forme de réalisation.

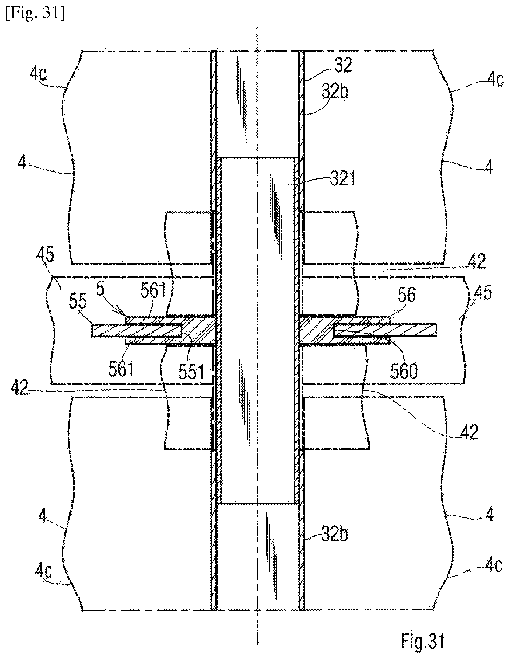

[Fig.31] est une vue en coupe du moyen de palier selon la troisième forme de réalisation associé à deux tronçons d'arbre d'enroulement et à un organe d'accouplement.

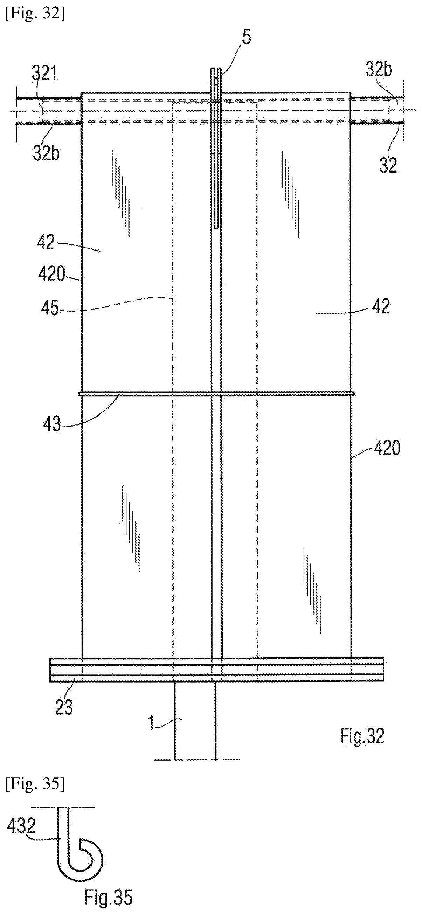

[Fig.32] est une vue des moyens d'étanchéité équipant l'installation selon la seconde forme de réalisation, la couverture de protection n'étant pas montrée sur cette figure.

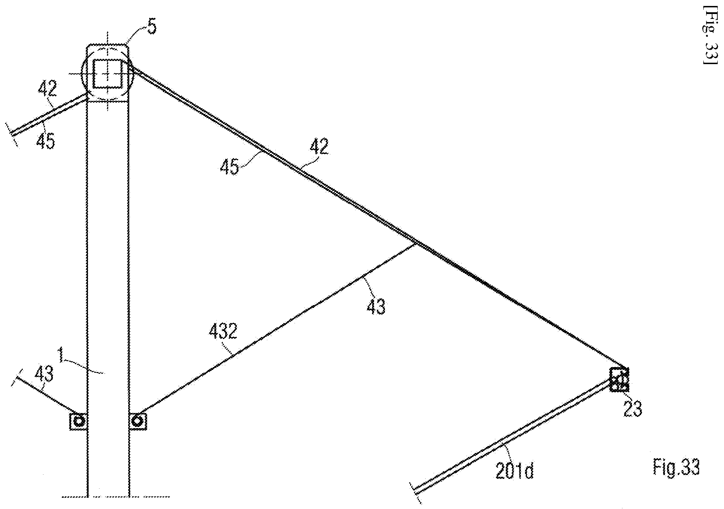

[Fig.33] est une vue de profil des moyens d'étanchéité selon la [Fig.32], la couverture de protection n'étant pas montrée sur cette figure.
[Fig.34] est une vue de face d'un élément de resserrement des bavettes d'étanchéité partie des moyens d'étanchéité.
[Fig.35] est une vue de détail selon la flèche F et selon une échelle agrandie, de la [Fig.34].

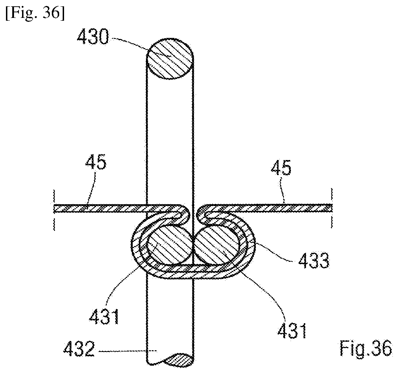

[Fig.36] est une vue en coupe selon la ligne BB de la [Fig.35].
[Fig.37] est une vue de détail d'un bras de déploiement.

### Description de modes préférés de réalisation de l'invention

L'installation sera décrite ci-après telle qu'elle est agencée et orientée une fois en place. Pour des raisons de clarté, il est fait référence au rang de plantes cultivées que l'installation a pour vocation de protéger. Telle que représentée, l'installation selon l'invention, de protection des plantes cultivées en rang telles que par exemple des pieds de vigne, comprend des poteaux 1 verticaux prévus pour être enfichés dans le sol S, selon au moins une rangée. On comprend que la rangée de poteaux est implantée de sorte à pouvoir protéger un rang de plantes. Les poteaux 1 verticaux, de préférence métalliques, protégés de la corrosion, comprennent un segment inférieur 1b qui est apte à être enfiché dans le sol, un segment supérieur 1a apte à se dresser depuis le sol et qui présente une zone supérieure 10 prévue pour s'élever au-delà de la canopée des plantes, c'est-à-dire dont la hauteur est choisie pour que ladite zone supérieure dépasse le niveau atteint par le feuillage des plantes, de sorte que l'ossature 2 (décrite plus loin) est située au-dessus du niveau des plantes, quelle que soit la conformation adoptée. Bien entendu, l'homme du métier ajustera les dimensions de l'installation au type de plantes à protéger.

L'installation comprend aussi une ossature 2 de conformation à géométrie variable, portée par la zone supérieure 10 des poteaux verticaux 1 et solidarisée à cette dernière, au-dessus de la canopée des plantes, ladite ossature 2 pouvant adopter à la commande une position déployée ou une position rétractée ; un moyen 3 de manœuvre de ladite ossature 2 entre les positions rétractée et déployée et une couverture de protection 4 souple portée par l'ossature 2. Cette couverture de protection 4, en position rétractée de l'ossature 2, est rassemblée sur elle-même et forme un boudin longitudinal au-dessus de la zone sommitale du rang de plantes et à écartement du niveau atteint par les plantes, tandis qu'en position déployée de l'ossature 2, elle s'étend au-dessus des plantes, formant ainsi un écran protecteur. Dans ce qui suit, les termes dépliés et déployés s'appliquant à l'ossature 2, aux modules d'ossature 20 et à la couverture de protection 4 sont considérés comme synonymes. Il en est de même pour les termes repliés et rétractés.

Les segments supérieur 1a et inférieur 1b de chaque poteau 1 pourront ne former qu'une seule entité ou bien être liés l'un à l'autre de manière séparable. Ainsi, selon une première forme de réalisation, le segment inférieurlb est formé par la partie inférieure d'un poteau 1 d'un seul tenant, sous forme de profilé métallique, s'étendant de manière continue entre ses deux extrémités inférieure et supérieure. Le segment inférieur 1b du poteau 1 pourra être directement au contact du sol mais en variante, il pourra être engagé, éventuellement de manière amovible, dans un fourreau métallique protégé de la corrosion, préalablement enfoncé dans le sol.

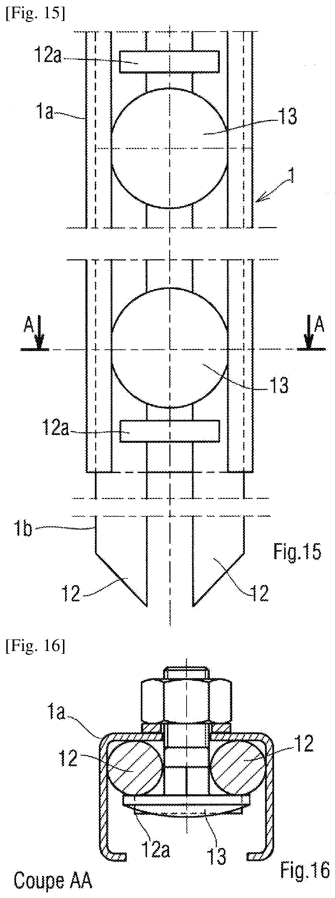

Selon une autre forme de réalisation, telle que représentée en figures 15 et 16, les segments supérieur 1a et inférieur 1b de chaque poteau sont fixés l'un à l'autre de manière séparable. Selon cette variante, le segment supérieur 1a de poteau est formé d'un profilé métallique de section droite en U présentant une aile basale et deux ailes latérales. Le segment inférieur 1b de poteau comprend une partie inférieure prévue pour être enfichée dans le sol et une partie aérienne ou supérieure, prévue pour recevoir en fixation, de manière démontable, le segment supérieur 1a de poteau. Selon cette forme de réalisation, le segment inférieur 1b de poteau 1 est formé d'au moins une broche métallique 12, verticale prévue pour être enfichée verticalement dans le sol par sa partie inférieure et être engagée par sa partie aérienne dans le segment supérieur 1a de poteau et y être fermement fixée par au moins un organe d'immobilisation 13. Avantageusement, le segment inférieur 1b est constitué de deux broches métalliques 12, verticales, maintenues écartées l'une de l'autre éventuellement par au moins deux entretoises horizontales 12a. Ces entretoises sont fixées par soudage à la partie aérienne des broches 12. Comme on peut le voir plus particulièrement en [Fig.16], la partie aérienne des deux broches est en appui contre les faces intrados des ailes latérales et basale du segment supérieur 1a de poteau. Avantageusement, le segment inférieur 1b est fixé par sa partie aérienne au segment supérieur 1a par deux organes d'immobilisation 13 distants en hauteur l'un de l'autre, constitués chacun, de préférence, par un boulon. La vis de ce boulon, par sa tige filetée, est engagée entre les deux broches 12 et ensuite dans un perçage traversant pratiqué dans l'aile basale du segment supérieur 1a, pour recevoir extérieurement à ce dernier, un écrou de serrage. La tête de la vis de l'organe d'immobilisation sera amenée, par manœuvre de l'écrou dans le sens du serrage contre les deux broches 12 soit par l'intermédiaire d'une rondelle d'appui soit directement, auquel cas la vis sera du type TRCC (Tête ronde, collet carré).

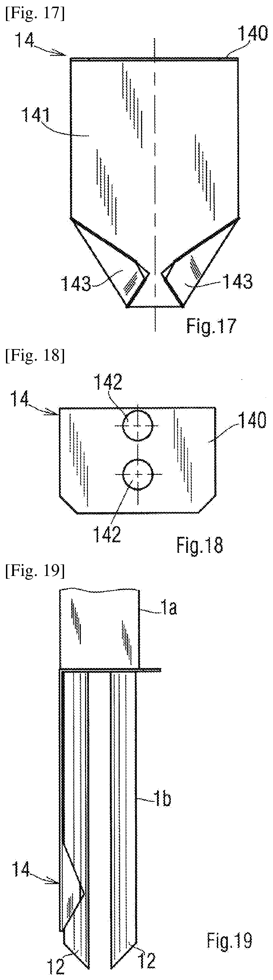

Le segment inférieur 1b de poteau pourra être équipé d'un organe d'ancrage 14 venant compléter l'action des broches et assurer un maintien latéral du poteau. Cet organe d'ancrage tel que représenté en figures 17 à 19 présente une première aile horizontale 140 prolongée vers le bas par une aile verticale141 terminée par une forme de pointe pour faciliter l'introduction de l'élément d'ancrage dans le sol. L'aile horizontale 140 est prévue pour recevoir en appui l'extrémité inférieure du segment supérieur 1a de poteau et présente deux perforations traversantes 142 formées selon un axe géométrique normal à l'aile verticale 141. Dans ces perforations 142 sont engagées les parties inférieures des deux broches constitutives du segment inférieur 1b de poteau. L'une des deux perforations 142 est tangente à un plan géométrique contenant la face intrados de l'aile verticale 141. De plus la forme en pointe de l'aile verticale présente deux retours opposés 143 formant un fourreau dans lequel est engagée la broche 12 correspondante. L'élément d'ancrage constitue de plus un gabarit de pose. Alternativement, l'élément d'ancrage 14 pourra être monté sur le poteau en sorte que les retours 143 soit orientés vers le haut.

La couverture de protection 4 portée par l'ossature 2 est une couverture souple telle qu'utilisée couramment dans le domaine agricole pour couvrir les surfaces cultivées, cette couverture de protection 4 pouvant être une bâche en matière synthétique ou un filet de protection du type anti-grêle et/ou du type anti-insecte. La matière utilisée confère à la couverture de protection 4 des propriétés de souplesse grâce auxquelles elle peut être facilement pliée sans détérioration aucune. Une telle couverture 4 n'a aucune tenue par elle-même, et en raison de son absence de raideur, peut se déformer aisément sous l'effet de son propre poids.

La couverture de protection 4 est préférentiellement formée d'une feuille souple imperméable. Selon une première forme de réalisation, la couverture est formée d'une simple feuille d'un matériau souple de synthèse, tandis que selon une seconde forme de réalisation, cette couverture de protection est formée de deux feuilles souples superposées, inférieure et supérieure, en matériau de synthèse. Selon cette disposition, la feuille souple inférieure constitue une couche d'usure.

La ou chaque feuille souple constitutive de la couverture de protection 4 pourra être formée d'un matériau transparent à la lumière ou bien d'un matériau apte à atténuer la lumière solaire. S'agissant de la vigne, une telle disposition, lorsque la couverture de protection 4 est déployée au-dessus du rang de plantes, est apte à réduire le risque d'échaudage des fruits. Préférentiellement, la couverture de protection 4 sera apte à résister à l'action du soufre et autres produits phytosanitaires utilisés dans la lutte contre l'oïdium par exemple.

La couverture de protection 4 pourra s'étendre de manière continue sur la longueur du rang de vigne ou bien sur plusieurs travées. Par travée il faut entendre l'intervalle entre deux poteaux 1 consécutifs. Alternativement, cette couverture de protection 4 sera divisée en segments et chaque segment de couverture couvrira une travée, c'est-à-dire s'étendra dans l'intervalle entre deux poteaux consécutifs.

Les poteaux 1 verticaux présentent une zone supérieure 10 qui se situe au-dessus de la canopée des plantes. À la zone supérieure 10 de chaque poteau 1, est solidarisée l'ossature 2. L'ossature 2 est formée de modules d'ossature 20 chacun porté par un poteau 1 et comprenant chacun une tête de guidage 200 fixée en zone supérieure 10 du poteau 1, et au moins un bras de déploiement gauche 201g ou droit 201d. Dans le cas où chaque module d'ossature comporte un bras gauche et un bras droit, ces derniers seront de préférence de mêmes longueurs.

Le ou chaque bras de déploiement est solidarisé par sa zone proximale au poteau 1 correspondant et ce, sous et à distance de la tête de guidage 200.

Avantageusement, chaque bras de déploiement est cintré vers le poteau 1. Ainsi, en position rétractée de l'ossature, chaque bras est en majeure partie disposé face au poteau correspondant et ne peut gêner en rien l'action des moyens d'entretien tels que le rognage ou autres opérations.

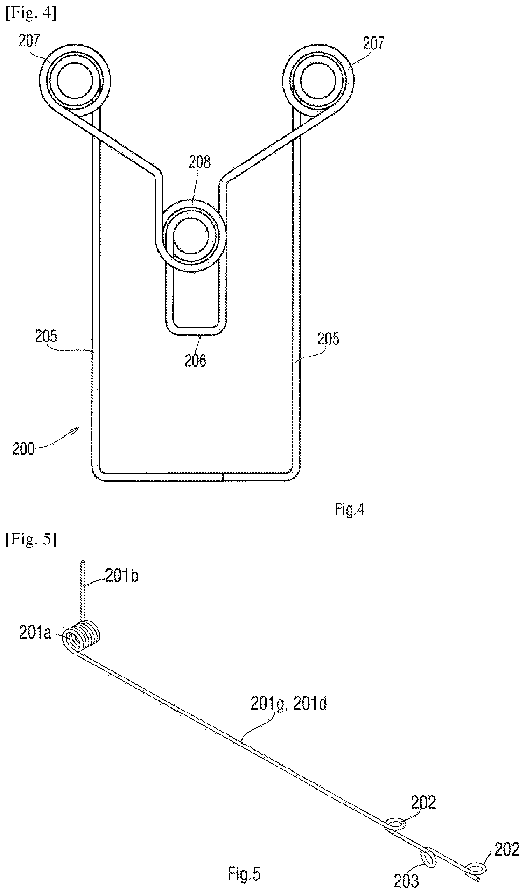

La tête de guidage 200 est dotée d'organes de guidage du moyen 3 de manœuvre de l'ossature 2. Cette tête 200 selon une première forme de réalisation, est formée par pliage d'un fil métallique cylindrique, de section appropriée, protégé de la corrosion, à haute limite élastique. Comme on peut le voir plus particulièrement en [Fig.4], la tête de guidage 200 comporte deux pieds latéraux 205 verticaux, et un pied central 206 vertical par lequel elle est enfichée et fixée dans la zone supérieure 10 du poteau 1. Chaque pied latéral 205 est doté d'un retour à angle droit prévu pour être engagé dans le poteau 1. Ces pieds latéraux 205 et central 206 portent en extrémité supérieure des organes de guidage du moyen 3 de manœuvre de l'ossature. Selon la forme de réalisation objet de la [Fig.4], ces organes de guidage sont formés par trois œillets dont deux 207 sont latéraux et le troisième 208 est central et occupe de préférence une position inférieure par rapport aux deux autres. Ces œillets sont formés par pliage du fil métallique constitutif de la tête de guidage 200.

De préférence, la distance entre la tête de guidage 200 et l'extrémité proximale de chaque bras de déploiement 201g, 201d est égale à la longueur de chaque bras. D'une autre manière, la zone distale du ou des bras de déploiement 201g, 201d de chaque module d'ossature, en position repliée, est située en regard de la tête de guidage 200 de ce module d'ossature 20.

Comme on peut le voir, le ou chaque bras 201g, 201d de chaque module 20 se développe substantiellement selon un plan géométrique transversal, perpendiculaire à la rangée de poteaux. Chaque bras de déploiement 201g, 201d est agencé de manière angulairement mobile entre la position déployée de l'ossature selon laquelle il est horizontal ou incliné par rapport au sol, soit vers le haut soit vers le bas, et la position repliée de l'ossature selon laquelle il est vertical et orienté vers le haut depuis sa zone proximale.

L'ossature 2 comporte au moins un élément longiforme latéral 21 solidarisé à la zone distale de chaque bras 201g ou 201d. Cet élément longiforme latéral 21 forme le ou l'un des bords longitudinaux de l'installation de protection. Pour une ossature 2 dont chaque module 20 comporte un bras gauche 201g et un bras droit 201d, seront prévus deux éléments longiformes latéraux 21 gauche et droit. L'élément longiforme latéral 21 gauche sera fixé à la zone distale de chaque bras gauche 201g et l'élément longiforme latéral 21 droit sera fixé à la zone distale de chaque bras droit 201d. À l'élément longiforme latéral 21 ou à chaque élément longiforme latéral 21 est solidarisée à la couverture de protection 4 par un de ses bords latéraux, cette dernière reposant, selon une première forme de réalisation, sur la tête de guidage 200 que comporte chaque module d'ossature 20. Préférentiellement, la couverture de protection 4 est solidarisée à l'élément ou à chaque élément longiforme latéral 21 par des agrafes ou autres.

Le ou chaque élément longiforme latéral 21 est avantageusement constitué par une corde axialement mise en tension, ou alternativement, par une tige rigide.

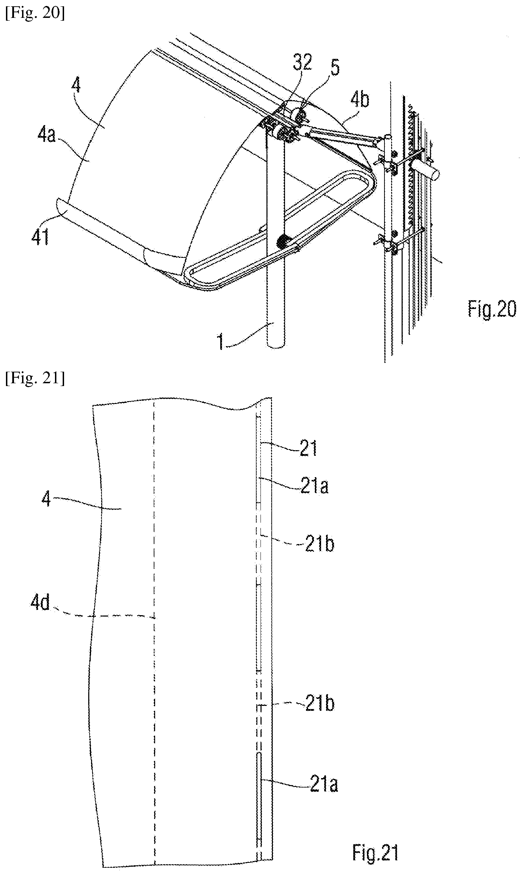

La ou chaque bordure longitudinale libre de la couverture de protection 4 sera agencée en goulotte 41 ([Fig.20]). Cette disposition permettra lors du déploiement de la couverture 4, la récupération des eaux de pluie résiduelles. Sera évité ainsi tout écoulement sur les plantes. En fin d'ouverture, la ou chaque goulotte 41 sera suffisamment inclinée latéralement pour déverser l'eau de pluie latéralement au rang de plantes à écartement de ce dernier. De plus, préférentiellement, la ou chaque bordure longitudinale de la couverture de protection 4 sera pliée sur elle-même et formera un ourlet longitudinal 4d sur sa face inférieure.

Selon cette disposition, comme on peut le voir en [Fig.21], le ou chaque élément longiforme latéral 21 est fixé à la couverture de protection 4 non plus par agrafes mais par engagement dans une succession de perçages traversants, équidistants, pratiqués dans la bordure correspondante de la couverture 4, à distance du bord longitudinal de cette bordure. Selon cette disposition, l'élément longiforme latéral 21 forme une alternance de bourrelets supérieurs 21a, et inférieurs 21b, formant respectivement des saillies sur la face supérieure de la couverture 4 et sur sa face inférieure. Ces bourrelets 21a et 21b sont parallèles au bord longitudinal de la bordure correspondante. Un tel agencement est connu des couturiers sous le terme de points avant. Cette disposition est propice à recourber la bordure de la couverture de protection 4 vers le haut notamment sous l'effet de la mise en tension de la corde constitutive de l'élément longiforme 21 et former ainsi la goulotte 41 correspondante. Il y a lieu de noter que les bourrelets 21a se retrouvent dans la goulotte 41 formée et forment des saillies sur le flanc extérieur de cette dernière. Il y a lieu également de noter que sous l'effet de la mise en tension de l'élément longiforme 21, les parties de couverture recouvrant les bourrelets inférieurs 21b forment des bossages sur la face supérieure de la couverture de protection 4. La disposition de bourrelets supérieurs 21a, lorsque le pan correspondant de couverture est suffisamment incliné vers le bas, favorise un égouttage régulier de l'eau de pluie, le long de la bordure de la couverture de protection 4, ces bourrelets supérieurs 21a constituant alors des zones privilégiées d'égouttage.

Par ailleurs, les bourrelets 21b que forme l'élément latéral longiforme 21 sur la face inférieure de la couverture de protection 4 forment des organes de suspension.

Selon une forme pratique de réalisation, le ou chaque élément longiforme latéral 21 est formé par une corde, préférentiellement en tension axiale, élastiquement extensible, d'un type connu, réalisée en élastomère. Grâce à cette caractéristique, l'élément longiforme latéral 21 est apte à se déformer sous l'effet de sollicitations externes par exemple celles dues à des engins de travail, et à reprendre sa forme initiale dès que cessent ces sollicitations. De plus, par sa mise en tension entre les bras de déploiement situés aux extrémités de la rangée de poteaux, l'élément longiforme latéral 21 maintient la couverture de protection 4 en tension selon la direction de la rangée et aussi selon une direction perpendiculaire à la ligne de faîtage que forment les extrémités supérieures des poteaux 1.

Les bras 201g, 201d sont formés à partir d'au moins une tige métallique protégée de la corrosion. Le ou chaque bras de déploiement 201g, 201d de chaque module d'ossature 20, est sollicité vers sa position de déploiement sous l'effet de l'action de forces de rappel. Ces forces de rappel pourront être internes au bras de déploiement 201g, 201d, auquel cas ce dernier sera élastiquement flexible. Elles pourront être externes à ce dernier et développées par un organe ressort monté en tension entre le bras de déploiement 201d, 201g et le poteau 1 auquel ce bras est solidarisé. En variante, ces forces de rappel seront générées par des contrepoids.

Selon la forme préférée de réalisation, les forces de rappel sont internes aux bras de déploiement 201d, 201g et chacun de ces derniers est formé à partir d'une tige en acier ressort, de section droite circulaire ou autre, d'un diamètre approprié.

Selon une première variante d'exécution, la zone proximale de chaque bras de déploiement se développe perpendiculairement à la direction générale de ce dernier et est agencée en ressort de torsion 201a à spires jointives. Selon cette configuration, le ou chaque bras de déploiement 201g 201d de chaque module d'ossature 20 est engagé, par sa zone proximale, sur un pion saillant 11, horizontal, encastré dans le poteau 1 correspondant. La zone proximale de chaque bras de déploiement 201d, 201g, est prolongée au-delà de la forme de ressort 201a, par un bec d'immobilisation 201b. Dans le cas où chaque module comporte un bras gauche 201g et un bras droit 201d, le pion saillant 11 reçoit la zone proximale de chaque bras de déploiement et le bec d'immobilisation de chaque bras de déploiement est fixé au bec d'immobilisation que comporte la zone proximale de l'autre bras de déploiement.

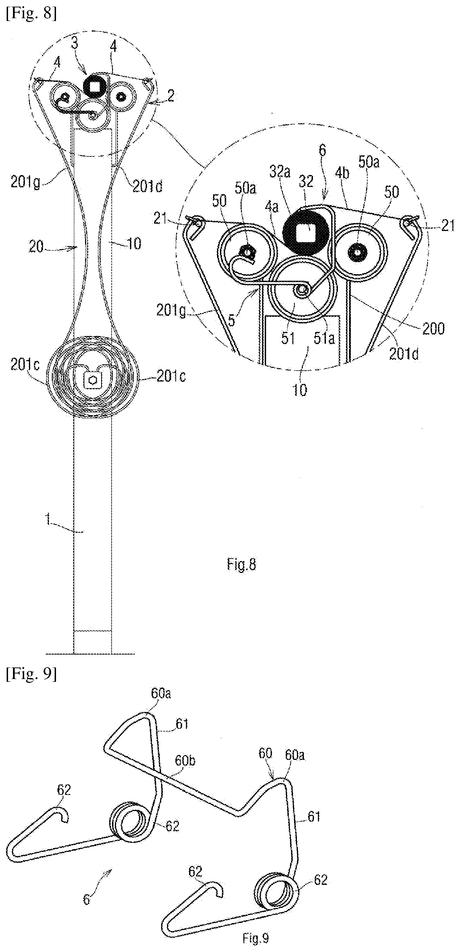

Selon une autre variante d'exécution ([Fig.8]), la zone proximale de chaque bras de déploiement 201d, 201g est conformée en ressort spiral 201c dont les spires se déploient selon un même plan géométrique normal à l'axe longitudinal de la rangée de poteau. Avantageusement, les spires de ce ressort 201c sont non jointives. Une telle disposition confère au bras de déploiement 201d, 201g une latitude de déplacement longitudinal limité.

Chaque bras de déploiement 201g, 201d est préférentiellement formé d'un seul tenant, mais en variante, il pourra être formé de deux tronçons de bras de même section ou de sections différentes, fixés l'un à l'autre par des cavaliers ou autres moyens autorisant l'ajustement de la longueur totale dudit bras.

Chaque bras de déploiement 201d, 201g, pourra être équipé d'une butée apte à limiter son déplacement angulaire vers le rang de plantes, cette butée angulaire étant prévue pour venir contre le poteau 1 sous l'effet de sollicitations externes exercées sur le pan de couverture correspondant. Une telle disposition limite, notamment sous l'effet du vent, la pénétration du pan de couverture soumis au vent vers le rang de plantes. En variante, chaque poteau 1 comporte une butée pour limiter le mouvement de pénétration des bras et de la couverture dans le rang de plantes.

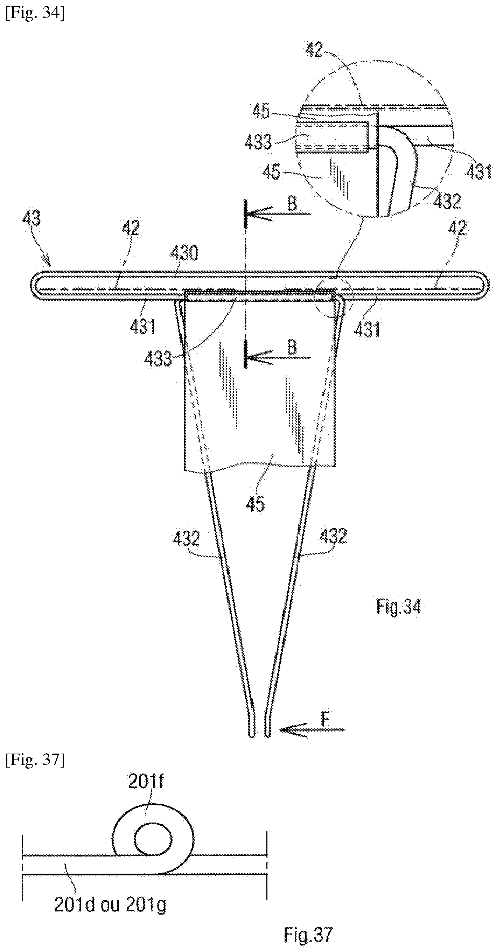

Chaque bras de déploiement 201g, 201d, comme on peut le voir en [Fig.37], entre ses deux extrémités sera enroulé sur lui-même selon un ou plusieurs tours pour former une ou plusieurs spires élastiques 201f, jointives, aptes à conférer au bras une déformabilité élastique supplémentaire, grâce à laquelle les à-coups sur l'installation dus aux rafales de vent seront davantage absorbées. De plus ces spires pourront servir de support à un moyen de chauffage tel que par exemple une résistance électrique de chauffage. Par ce biais, en période froide, lorsque l'ossature et la couverture seront totalement déployées, il sera possible de maintenir la température du volume sous la couverture de protection, au-dessus du point de gelée. Cette résistance électrique de chauffage sera connectée à une source de courant électrique.

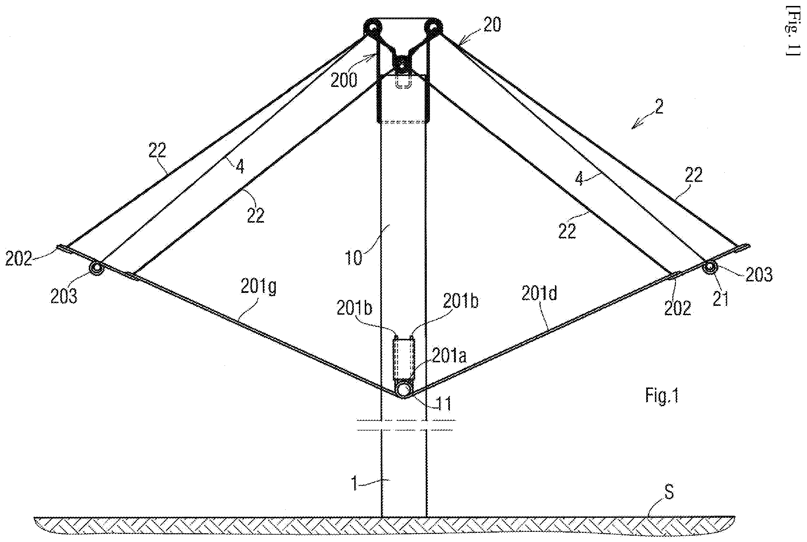

Selon une première forme de réalisation de l'installation selon l'invention, telle que représentée en [Fig.1] à [Fig.5], le ou chaque bras 201g, 201d de chaque module d'ossature 20 est associé à deux éléments longiformes de maintien 22 de la couverture 4, superposés, s'étendant tous deux entre la tête de guidage 200 et la zone distale du bras de déploiement correspondant 201g ou 201d. La couverture de protection 4 est disposée entre les éléments longiformes de maintien 22 associés à chaque bras 201g, 201d de chaque module d'ossature 20. Cette couverture est fixée au ou à chaque élément longiforme latéral 21 et chevauche la tête de guidage 200 que comporte chaque module d'ossature 20. De cette manière, la couverture de protection 4 se trouve parfaitement maintenue sur le rang de plantes et peut résister à toutes sollicitations dues au vent, à la pluie, à la grêle, etc.

Selon une forme préférée de réalisation, les éléments longiformes de maintien 22 sont formés par des cordes élastiquement déformables d'un type connu.

Préférentiellement, le ou chaque bras 201g et 201d de chaque module d'ossature 20 comporte en zone distale deux formes d'accrochage 202 distantes l'une de l'autre auxquelles sont respectivement solidarisés les éléments longiformes de maintien 22 par leur extrémité correspondante. Avantageusement, ces deux formes d'accrochage sont agencées en œillet. Cette disposition permet de fixer au bras 201g, 201d, aisément par nouage, les éléments longiformes de maintien 22.

Le ou chaque bras de déploiement 201g, 201d de chaque module d'ossature 20 entre les deux formes d'accrochage 202, comporte un œillet 203 dans lequel est enfilé l'élément longiforme latéral 21 correspondant. Ainsi le ou chaque élément longiforme latéral 21 se trouve parfaitement maintenu sur les bras de déploiement et ne peut en être écarté. Cette disposition contribue au parfait maintien de la couverture de protection 4 sur l'ossature 2.

Avantageusement, chaque forme d'accrochage 202 et œillet 203 est obtenue par pliage selon une boucle, de la tige constitutive du bras de déploiement correspondant 201g, 201d.

Le ou chaque bras de déploiement 201d, 201g, de chaque module d'ossature 20 est sollicité vers la position de repliement de l'ossature 2 par le moyen 3 de manœuvre de l'ossature. Ce mouvement de repliement s'effectue à l'encontre des actions de rappel exercées sur les bras de déploiement. Comme indiqué précédemment, ces forces de rappel sont générées par des contrepoids et/ou par des ressorts et/ou ou par les forces élastiques internes de chaque bras et/ou par un couple de torsion développé par la forme de ressort conférée à la zone proximale de chaque bras de déploiement 201d, 201g.

Le moyen 3 de manœuvre de l'ossature 2 est de préférence conçu apte à assurer un repliement relativement lent de l'ossature 2 et de la couverture de protection et un déploiement rapide de ces dernières, limité à quelques secondes. Ce moyen 3 de manœuvre comprend d'une part au moins un élément primaire 30 d'actionnement commun aux différents modules d'ossature 20, et d'autre part, des paires d'éléments longiformes secondaires 31 d'actionnement, guidés par les têtes de guidage 200 des modules d'ossature 20.

L'élément primaire 30 d'actionnement se développe le long de la rangée de poteaux, au-dessus de cette dernière et est porté et guidé par la tête de guidage 200 que comporte chaque module d'ossature 20.

Les paires d'éléments secondaires 31 d'actionnement sont fixées d'une part à l'élément primaire 30 d'actionnement et sont actionnées par ce dernier, et d'autre part aux bras de déploiement 201g, 201d des modules d'ossature 20 en vue de leur actionnement. Avantageusement, les éléments secondaires 31 d'actionnement sont formés par des liens souples sous forme de cordes ou de sangles de préférence élastiquement extensibles.

Les paires d'éléments secondaires 31 d'actionnement sont réparties le long de l'élément primaire 30 d'actionnement et chaque paire d'élément secondaire 31 d'actionnement n'est fixée qu'à un seul bras d'actionnement gauche 201g ou droit 201d d'un même module d'ossature 20. De même, le ou chaque bras d'actionnement 201g ou 201d d'un même module d'ossature 20 n'est actionné que par une seule paire d'éléments secondaires 31 d'actionnement.

L'élément primaire 30 d'actionnement est engagé en coulissement dans l'œillet central 208 de la tête de guidage 200 que comporte chaque module d'ossature 20 et est, de préférence, constitué par un câble métallique dont une des deux zones terminales, par exemple la zone avant, est enroulée sur le tambour d'un treuil de traction, motorisé (non représenté) et dont l'autre zone terminale, la zone arrière, est fixée à un mécanisme de rappel (non représenté) qui peut être constitué par un organe élastique tel un ressort à spires, ou bien par un contrepoids.

Le treuil, du type réversible, comporte un mécanisme anti-retour associé à un actionneur de débrayage commandé à distance. Ce mécanisme anti-retour est formé par exemple par une roue à rochet et par un cliquet commandé par l'actionneur. Le cliquet lorsqu'il est en prise avec les dents de la roue à rochet s'oppose à la rotation du tambour du treuil dans le sens du déroulement de l'élément primaire 30 d'actionnement.

Le mécanisme de rappel sollicite l'élément primaire 30 d'actionnement dans le sens de son déroulement et assure son maintien en tension. Par actionnement du tambour du treuil dans le sens de l'enroulement, l'élément primaire 30 est déplacé parallèlement à la rangée de poteaux vers l'avant et les éléments secondaires 31 subissent un effort de traction sous l'effet duquel ils sont déplacés dans le même sens. Sous l'effet de ce déplacement, les éléments secondaires 31 entraînent les bras de déploiement 201g, 201d vers leur position de repliement.

Par débrayage du mécanisme anti-retour, le tambour du treuil se trouve libéré et est actionné dans le sens du déroulement notamment par le mécanisme de rappel. Dans cette situation, les bras de déploiement sous l'effet des diverses forces auxquelles ils sont soumis, peuvent librement se déployer et contribuer à l'entraînement de l'élément primaire dans le sens du déroulement par les actions de traction qu'ils exercent sur cet élément primaire 30 par l'entremise des éléments secondaires 31 d'actionnement. On comprend que le moteur du treuil n'est activé que pour assurer le repliement de l'ossature 2 et de la couverture de protection 4, et que le déploiement de ces dernières n'est assuré que par les forces de rappel internes ou externes au bras de déploiement. Ainsi, une panne du moteur du treuil n'altérera en rien la possibilité de déploiement de l'ossature et de la couverture.

Avantageusement, les éléments secondaires 31 d'actionnement forment les éléments longiformes 22, superposés, de maintien de la couverture de protection 4. Plus précisément, la partie de chaque élément secondaire 31 d'actionnement située entre la tête 200 et le bras correspondant 201g ou 201d forme un des deux éléments longiformes de maintien 22, ladite partie, comme on le comprend, étant de longueur variable, sa longueur dépendant du degré de déploiement des bras de déploiement 201g et 201d. Dans cette configuration, celui des deux éléments secondaires 31 d'actionnement de chaque paire d'éléments secondaires 31 d'actionnement, disposé sous la couverture de protection 4, ou élément secondaire inférieur, est engagé dans l'œillet central 208 de la tête de guidage 200, tandis que l'autre élément secondaire 31 ou élément secondaire supérieur, est engagé dans l'œillet latéral 207 le plus proche. Selon cette forme de réalisation, la couverture de protection 4 en regard de chaque œillet latéral 207 de la tête 200 comporte une ouverture de passage de ou de chaque élément secondaire 31 supérieur. De préférence, l'œillet central 208 de chaque tête de guidage 200 occupe une position inférieure par rapport à celle occupée par les œillets latéraux 207.

Toujours selon la forme préférée de réalisation, chaque œillet 207, 208, en considérant le sens du mouvement de l'arrière vers l'avant des éléments primaire 30 et secondaires 31, est agencé en cône d'introduction. À cet effet, chaque œillet 207, 208 est formé de deux spires jointives, la spire arrière, en considérant le sens du mouvement de l'arrière vers l'avant des éléments primaire et secondaires, étant d'un diamètre plus important que la spire avant.

Avantageusement, la couverture 4 comporte des plis longitudinaux 40 afin de faciliter son repliement entre les éléments longiformes de maintien 22 superposés.

Selon la forme préférée de réalisation, chaque module d'ossature 20 comprend un bras gauche 201g et un bras droit 201d, chacun associé à une paire distincte d'éléments longiformes de maintien 22 superposés et à une paire distincte d'éléments secondaires 31 d'actionnement.

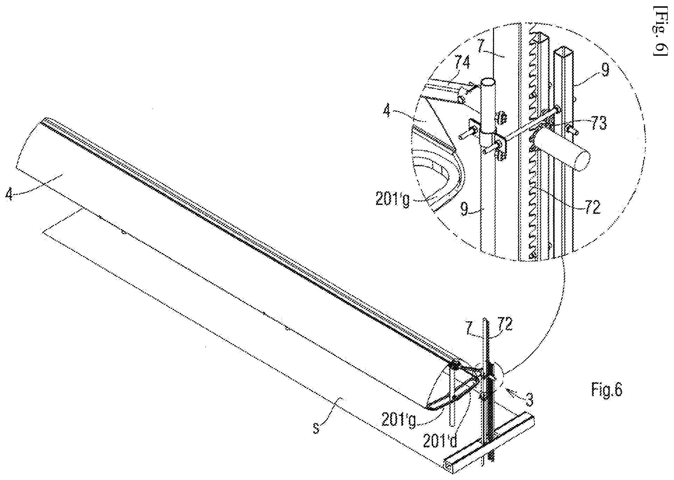

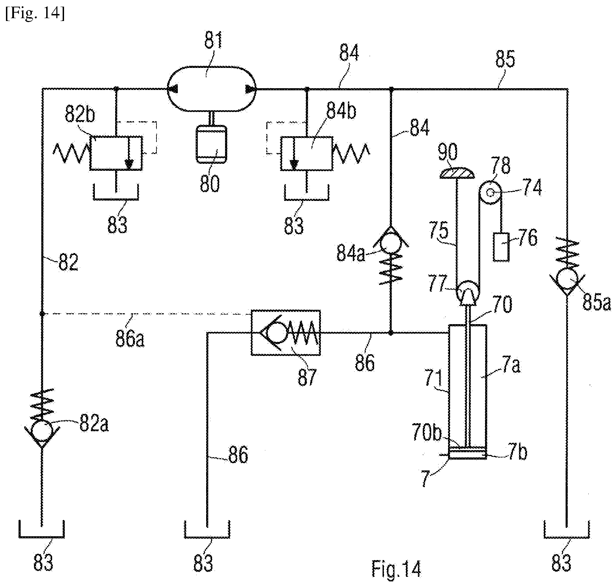

Aux [Fig.6] à [Fig.14] est représentée une seconde forme de réalisation de l'installation selon l'invention. On observe sur ces figures que l'installation est formée comme précédemment d'une ossature 2 de conformation à géométrie variable, solidaire de la zone supérieure 10 des poteaux 1 verticaux, pouvant adopter à la commande une position déployée ou une position repliée. Cette ossature 2 porte une couverture de protection 4 souple et comporte toujours des modules d'ossature 20 chacun porté par son poteau 1, chaque module d'ossature 20 comprenant au moins un bras de déploiement 201d, 201g solidarisé par sa zone proximale au poteau 1 correspondant et ce, de manière angulairement mobile entre la position déployée de l'ossature 2 selon laquelle il est horizontal ou incliné par rapport au sol et la position rétractée de l'ossature selon laquelle il est vertical et orienté vers le haut depuis sa zone proximale. Cette ossature 2 comporte comme précédemment au moins un élément longiforme latéral 21 solidarisé à la zone distale du ou de chaque bras de déploiement auquel est fixée la couverture de protection 4. Enfin, l'installation comporte un moyen 3 de manœuvre de l'ossature 2 entre les positions déployée et rétractée, et de maintien de cette dernière dans l'une ou l'autre position ou dans une position intermédiaire.

Selon une première forme de réalisation, chaque bras de déploiement comporte en extrémité distale une pince de fixation de l'élément longiforme latéral 21, mais selon la forme préférée de réalisation, l'extrémité distale de chaque bras 201g, 201d, est agencée en boucle ouverte pour recevoir l'élément longiforme latéral 21 correspondant et est équipée d'une barrette longiforme présentant une boucle médiane par laquelle elle est engagée en partie supérieure du bras dans la boucle que comporte ce dernier. Cette barrette longiforme est fixée par des agrafes à l'élément longiforme latéral 21 et a pour but de renforcer, en la rigidifiant, la liaison mécanique entre cet élément latéral et le bras de déploiement, et d'écarter tout risque de détérioration de la couverture à ce niveau.

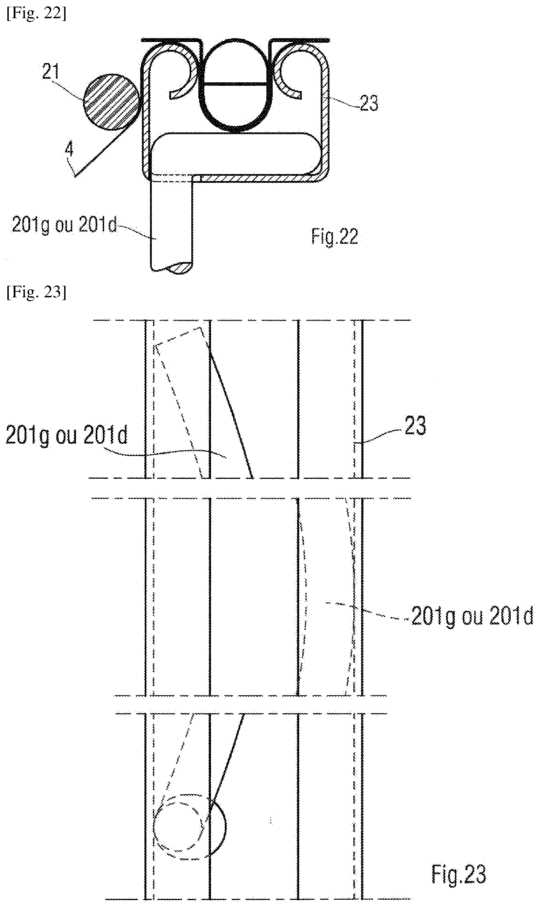

Selon une autre forme de réalisation telle que représentée en figures 22 et 23, chaque bras, présente une première branche proximale liée à sa forme de ressort 201a ou 201c et une branche distale sensiblement parallèle à l'axe longitudinal du rang, séparée de la précédente par un coude à angle droit. La branche distale de chaque bras de déploiement 201g, 201d est engagée de manière articulée dans un profilé de liaison 23 métallique recevant en fixation la bordure de la couverture de protection 4. La couverture de protection 4 sera plaquée contre ce profilé de liaison 23 par l'élément longiforme 21 comme le montre la [Fig.22].

Selon la forme préférée de réalisation le profilé de liaison 23 présente une section droite en U et comporte une aile basale bordée de deux ailes latérales dont le bord libre longitudinal de chacune est replié vers l'intérieur et forme un bourrelet longitudinal. L'aile basale du profilé de liaison 23 comporte une perforation traversante par laquelle est engagée dans le volume de ce profilé 23, la branche distale du bras de déploiement, cette dernière prenant appui sur la face intrados de l'aile basale de ce profilé de liaison 23. Le diamètre de cette perforation est bien plus grand que le diamètre de la section droite de la tige constitutive du bras de déploiement afin de conférer au profilé de liaison 23 une latitude limitée de déplacement angulaire autour d'un axe géométrique parallèle à ses ailes latérales. Comme on peut le voir en figures 22 et 23, cette perforation traversante est pratiquée au plus près de l'une des deux ailes latérales du profilé de liaison 23. De plus, la branche distale du bras de déploiement est avantageusement cintrée et prend appui sur les faces internes des deux ailes latérales du profilé de liaison 23 et est légèrement contrainte dans ce profilé 23. Les bourrelets formés par repliement des bords libres des ailes latérales, forment deux butées longitudinales assurant le maintien dans le profilé de liaison 23 de la branche distale cintrée du bras de déploiement 201g, 201d.

Préférentiellement, la couverture 4 est montée en fixation dans le profilé 23 de liaison. À cet effet, la couverture de protection 4, par sa bordure longitudinale, est introduite dans le volume interne du profilé et y est bloquée par une première clé sous forme de profilé élastique de section droite substantiellement en U et par une seconde clé de blocage introduite entre les ailes de la première clé de blocage. Ce système de clé de blocage, outre la fixation de la couverture de protection 4, complète le maintien dans le profilé de liaison 23 de la branche distale cintrée du bras de déploiement 201d, 201g.

Selon la seconde forme de réalisation de l'installation selon l'invention, le moyen 3 de manœuvre de l'ossature 2 est conçu apte à assurer un repliement relativement lent de l'ossature 2 et de la couverture de protection et un déploiement rapide de ces dernières, dont la durée est limitée à quelques secondes. Ce moyen de manœuvre comprend un arbre d'enroulement 32, motorisé, préférentiellement creux et de section droite carrée, porté par la tête de guidage 200 de chaque module d'ossature 20. Cet arbre d'enroulement 32 est accouplé à un moyen moteur d'entraînement en rotation. L'arbre d'enroulement 32, formé par un tube de section droite de préférence polygonale, par exemple carrée présente un volume interne formé par un vide longitudinal s'étendant d'une extrémité à l'autre dudit arbre et quatre parois latérales longitudinales, entourant ce vide.

L'arbre d'enroulement 32 est prolongé axialement au-delà du moyen de palier 5 porté par l'un des poteau 1 d'extrémité de la rangée de poteau, par une forme d'axe d'accouplement 323, tubulaire, par laquelle il est accouplé au moyen moteur d'entraînement en rotation. L'arbre d'enroulement 32 et la forme d'axe d'accouplement 323 font corps l'un avec l'autre et sont alignés. Leur volume interne respectif est en correspondance l'un avec l'autre. La couverture de protection 4 est fixée à cet arbre 32 et s'enroule sur ce dernier. Cette couverture par l'une au moins de ses deux bordures longitudinales est fixée à l'élément longiforme latéral 21 ou à l'un de ces deux derniers, comme décrit précédemment.

La couverture de protection 4 sera fixée à l'arbre d'enroulement 32 soit par une de ses bordures longitudinales soit par sa zone médiane longitudinale. Selon le premier cas de figure, la partie déroulée de la couverture de protection 4 ne formera au-dessus du rang de plantes qu'un seul pan de couverture 4a, 4b, protecteur, incliné vers le bas, tandis que selon le second cas de figure, la partie déroulée de la couverture de protection 1 formera au-dessus du rang de plantes deux pans de couverture, protecteurs, opposés, inclinés vers le bas.

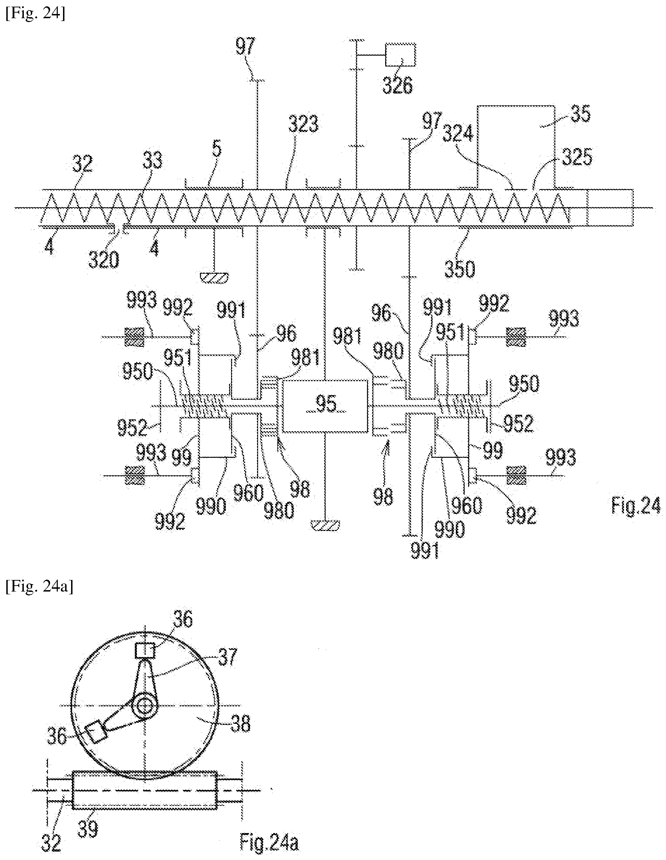

Selon une première forme de réalisation, la couverture de protection 4 est fixée à l'arbre d'enroulement 32 par des pinces élastiques du genre clip. Selon une autre forme de réalisation [Fig.24], la couverture 4 est fixée à l'arbre d'enroulement 32 par des rivets creux 320, formant buses doseuses de distribution, engagés dans des perçages traversants pratiqués dans l'une des parois longitudinales de l'arbre d'enroulement 32. Ainsi, par ce biais, lorsque la couverture de protection 4 est totalement déployée, il devient possible de répandre sur le rang de plantes un produit de traitement phytosanitaire, ce produit pouvant être un gaz, un liquide ou bien une poudre par exemple du soufre. Par ce biais il devient également possible de distribuer un flux d'air ou de l'eau à température adaptée pour prévenir les gelées en saison froide, l'ossature et la couverture étant alors totalement déployée. S'agissant de l'épandage d'un produit phytosanitaire en poudre, l'arbre d'enroulement 32 et la forme d'axe d'accouplement 323 reçoivent dans leur volume interne un élément 33 d'alimentation des buses en poudre, cet élément d'alimentation 33 sous forme hélicoïdale, présentant une succession de spires non jointives de mêmes diamètres. Le diamètre de chaque spire est légèrement inférieur à la largeur du volume interne de l'arbre d'enroulement et de la forme d'accouplement et les rivets creux 320 formant buses de distribution sont situés au plus près chacun de l'un des deux angles que forme la paroi latérale qui les reçoit avec les deux parois latérales adjacentes. Préférentiellement, ces rivets creux 320 sont disposés alternativement au plus près de l'une de ces deux parois latérales et au plus près de l'autre.

L'élément d'alimentation 33 est accouplé à un organe moteur dédié monté de manière amovible en extrémité de la forme d'axe d'accouplement 323. Le volume interne de l'arbre d'enroulement 32 et plus particulièrement de la forme d'axe d'accouplement 323 est prévu pour être en relation de communication avec un réservoir 35 de poudre, de préférence amovible.

En [Fig.24] est représentée de manière schématique une telle disposition d'alimentation en poudre. On peut voir sur cette figure que la forme d'axe d'accouplement 323 comporte une portée cylindrique 324, dotée de perçages radiaux traversants 325, sur laquelle est montée de manière amovible le réservoir 35 de poudre, ce dernier, à cet effet comportant en partie inférieure un logement traversant 350, cylindrique par lequel il est engagé de manière étanche sur la portée cylindrique 324. Ce réservoir de poudre 35 est équipé d'une ouverture supérieure de chargement en poudre et d'une ouverture inférieure de délivrance de poudre prévue pour être en relation de communication avec les perçages radiaux traversants 325 de la portée cylindrique 324. De cette façon, la poudre peut s'écouler librement depuis le réservoir 35 vers le volume interne de la forme d'axe d'accouplement 323 et vers l'élément d'alimentation 33.

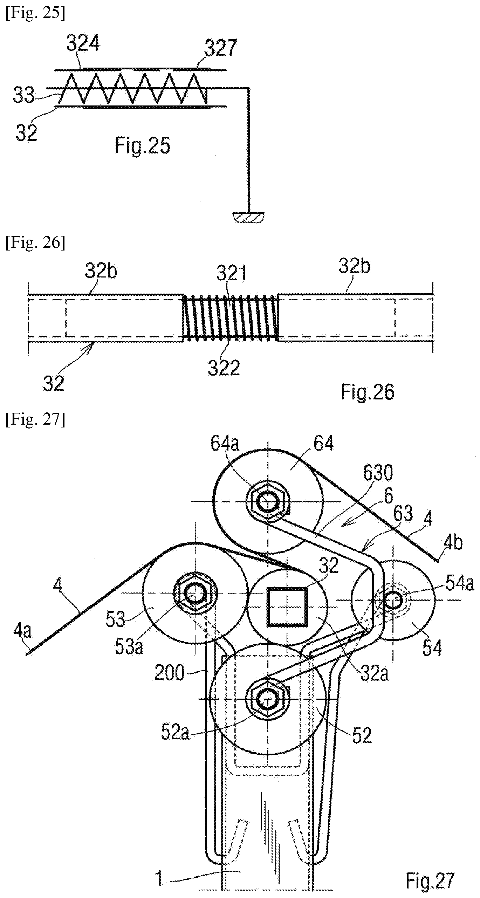

Ce réservoir 35 de poudre est immobilisé en position verticale par tout moyen connu. En vue de son chargement en poudre, l'arbre d'enroulement 32 est immobilisé en rotation tandis que l'élément d'alimentation 33 est entraîné en rotation par son moteur selon le sens correspondant au mouvement de la poudre depuis le volume interne de la forme d'axe d'accouplement 323 vers les buses de délivrance constituées par les rivets creux 320. Une fois que le volume interne de l'arbre d'enroulement 32 aura reçu la quantité requise de poudre, le réservoir 35 pourra être retiré et dans ce cas un manchon d'obturation 327 ([Fig.25]) sera engagé sur la portée cylindrique 324 afin d'obturer les perçages radiaux 325. L'élément d'alimentation 33, comme représenté en [Fig.25] sera alors immobilisé en rotation, par exemple en fixant l'une de ses extrémités à un piquet enfoncé dans le sol. L'entraînement en rotation de l'arbre d'enroulement 32 se traduira par le brassage de la poudre qu'il contient de sorte que tous amas de poudre qui pourraient s'y être formés seront disloqués.

Les rivets creux 320, tant que la couverture 4 n'est pas totalement déployée sont obturés par cette dernière. La position angulaire terminale de l'arbre d'enroulement 32 et des bras de déploiement 201g et 201d, correspondant au déploiement complet de la couverture de protection 4, à la désobstruction des rivets 320 et à l'orientation de ces derniers vers le bas dans une position de délivrance d'un produit phytosanitaire aux plantes, sera repérée par un capteur angulaire 326 connu en soi accouplé à l'arbre d'enroulement 32. Ce capteur angulaire 326 sera également apte à repérer une position angulaire de quasi complet déploiement de la couverture 4, selon laquelle les rivets creux sont encore obturés par la couverture 4 ainsi que la position terminale de complet repliement de couverture de protection 4. Ce capteur angulaire 326 sera connecté à une unité de contrôle et de commande connue en soi, apte à commander le déploiement et repliement de la couverture de protection, notamment en fonction des conditions météorologiques du moment.

Pour vider l'arbre d'enroulement 32 de la poudre qu'il contient, le réservoir de poudre 35 sera d'abord positionné de telle sorte que sa bouche de chargement soit orienté vers le bas. Par la suite, le réservoir sera immobilisé en position et l'élément d'alimentation 33 sera entraîné en rotation selon un sens correspondant au mouvement de la poudre vers le réservoir, l'arbre d'enroulement 32 demeurant immobile.

Comme on le conçoit, le repliement de la couverture de protection 4 s'effectue par enroulement sur l'arbre 32, ce dernier, étant à cet effet entraîné en rotation. Lors de l'enroulement, le ou chaque bras de déploiement 201g, 201d, se tend et emmagasine de l'énergie mécanique. Ainsi, lorsque l'arbre 32 d'enroulement est relâché ou est entraîné dans le sens du déroulement, le ou chaque bras de déploiement 201g, 201d en se détendant, facilite et/ou génère le déroulement de la couverture de protection 4 et son déploiement au-dessus du rang de plantes en exerçant sur ladite couverture, par l'entremise du ou de chaque élément longiforme latéral 21 un effort de traction.

L'arbre 32 d'enroulement et la partie enroulée sur cet arbre de la couverture de protection 4, forment un rouleau 32a dont le diamètre dépend du degré d'enroulement de la couverture 4. Chaque pan de couverture 4a, ou 4b se développe selon un plan géométrique tangent au rouleau 32a. Ainsi, selon la position du plan tangent, ce pan de couverture 4a, 4b peut être supérieur au rouleau 32a c'est-à-dire tangent à l'une des génératrices supérieures du rouleau 32a, ou inférieur au rouleau 32a, c'est-à-dire tangent à l'une des génératrices inférieures du rouleau 32a. Selon cette disposition, les bras gauche et droit présenteront des longueurs différentes, les bras coopérant avec le pan supérieur seront plus longs que les autres.

Toujours selon cette forme de réalisation, chaque tête de guidage 200 porte au moins un moyen de palier 5 supportant le rouleau 32a. Le moyen de palier 5 que comporte chaque module d'ossature 20, outre sa fonction de support, assure d'une part le guidage du rouleau 32a, et d'autre part, facilite la rotation de ce dernier par rapport à son axe longitudinal.

L'arbre 32 d'enroulement est formé de préférence par un tube de section droite carrée, mais en variante, cet arbre d'enroulement sera formé d'un tube de section droite circulaire. L'arbre 32 d'enroulement peut être formé d'un seul tenant ou bien de plusieurs tronçons d'arbre 32b aboutés les uns aux autres, par l'entremise d'organes d'accouplement 321, sous forme d'axes prismatiques, montés avec jeu fonctionnel dans lesdits tronçons d'arbre 32b ([Fig.26]) pour y coulisser librement. Ces organes d'accouplement 321 présentent chacun une section droite polygonale complémentaire de celle du volume interne de chaque tronçon d'arbre 32b pour assurer une transmission de couple et de mouvement avec très peu de jeu. Chaque organe d'accouplement 321 et chaque tronçon d'arbre 32b sont montés avec possibilité de déplacement axial les uns par rapport aux autres.

De préférence, pour ce qui concerne une couverture de protection 4, s'étendant de manière continue sur la totalité du rang de plantes ou sur plusieurs travées, sur chaque organe d'accouplement 321 est enfilé un ressort de compression 322 prenant appui sur les extrémités des deux tronçons d'arbre 32b associés afin de les solliciter en écartement l'un de l'autre. Avant la fixation de la couverture de protection à l'arbre d'enroulement 32, ce dernier est axialement comprimé afin de rapprocher les tronçons d'arbre 32b les uns des autres par compression des ressorts 322. Après fixation de la couverture 4 à l'arbre d'enroulement 32, les forces de compression exercées sur cet arbre sont relâchées afin que la couverture de protection 4 soit axialement tendue sous l'effet de l'action d'écartement exercée par les ressorts de compression 322.

Selon une forme pratique de réalisation, le moyen de palier 5 est formé d'au moins deux galets 50, 51, définissant un berceau d'appui et de guidage du rouleau 32a et de la couverture de protection 4, chacun desdits galets 50, 51 étant monté librement rotatif sur un axe 50a, 51a horizontal, fixé à la tête de guidage 200 et s'étendant de manière parallèle à la rangée de poteaux. De préférence, ce moyen de palier comporte deux galets latéraux 50 écartés l'un de l'autre et un galet médian 51 occupant une position inférieure par rapport à celle occupée par les galets latéraux 50. Les axes 50a de guidage des galets latéraux 50 sont montés en fixation dans les œillets latéraux 207 de la tête de guidage 200, tandis que l'axe 51a de guidage du galet médian 51 est monté en fixation dans l'œillet central 208 de ladite tête 200. Ces différents galets sont de préférence de mêmes dimensions. Le rouleau 32a prend appui sur le galet médian 51 et le diamètre des galets 50 est choisi de telle sorte que le rouleau 32a par sa génératrice supérieure, quel que soit son diamètre, n'occupe pas un niveau de hauteur supérieur à celui occupé par les génératrices supérieures des galets latéraux 50.

La tête de guidage 200 pourra être équipée de deux moyens de palier 5 disposés en vis-à-vis l'un de l'autre de part et d'autre du poteau 1 correspondant. Dans ce cas de figure, les axes 50a et 51a seront communs aux deux moyens de palier 5 et le plan géométrique vertical selon lequel est amené à se déplacer le ou chaque bras de déploiement entre les positions déployée et rétractée de l'ossature 2, sera situé entre les deux moyens de palier 5. Avantageusement, chaque bras de déploiement par sa zone distale, en position rétractée de l'ossature 2, vient au-dessus du ou des moyens de palier 5 correspondants.

Il est nécessaire d'éviter que le rouleau 32a formé par l'arbre 32 d'enroulement et la partie enroulée de la couverture de protection 4 puisse s'extraire des moyens de palier 5 sous l'effet de sollicitations externes, par exemple sous l'effet du vent. C'est pourquoi chaque module d'ossature 20 est équipé d'un dispositif anti-soulèvement 6 formant une butée 60 au-dessus du rouleau 32a pour maintenir ce dernier en place dans le ou chaque moyen de palier 5 tout en autorisant sa rotation autour de son axe longitudinal. Cette butée 60 s'oppose donc aussi bien au mouvement de translation vers le haut du rouleau 32a qu'au mouvement latéral de ce dernier, ou pour le moins limite l'amplitude de ces deux mouvements. De préférence, le dispositif anti-soulèvement 6 est fixé au ou à chaque moyen de palier 5.

Selon une forme pratique de réalisation, le dispositif anti-soulèvement 6 est doté d'une forme de crosse portée par au moins un bras 61 solidaire du moyen de palier 5, ladite forme de crosse formant la butée 60 précitée. Cette forme de crosse entoure partiellement le rouleau 32a et forme un dôme au-dessus de ce dernier. La butée 60 pourra être formée par tout autre élément, par exemple par un galet.

Dans le cas où la couverture de protection 4 ne forme qu'un seul pan de couverture supérieur 4b, ou deux pans de couverture inférieur 4a et supérieur 4b, la butée 60, préférentiellement sous forme de crosse, est engagée dans le rouleau 32a immédiatement sous le pan de couverture supérieur 4b toujours en entourant partiellement ledit rouleau 32a et en formant un dôme sur ce dernier.

Le bras 61 du dispositif anti-soulèvement est doté d'une forme d'œillet 62, circulaire, par laquelle il est engagé sur l'axe horizontal 51a du galet médian 51, cette forme d'œillet étant prolongée par une butée prévue pour venir sous et contre l'un des axes 50a de l'un des galets latéraux 50. Avantageusement, le diamètre interne de la forme d'œillet est bien plus important que le diamètre de l'axe horizontal 51a afin de conférer au dispositif anti-soulèvement une latitude de déplacement limitée radialement par rapport audit axe de façon à pouvoir absorber les variations du diamètre du rouleau 32a. Ainsi, le dispositif anti-soulèvement se trouve parfaitement solidarisé au moyen de palier 5 tout en pouvant se déplacer légèrement par rapport à ce dernier.

Pour un module d'ossature 20 comportant deux moyens de palier 5, le dispositif anti-soulèvement 6 sera fixé à ces deux moyens de palier 5 et comportera une forme de crosse 60 s'étendant d'un moyen de palier 5 à l'autre au-dessus de ces derniers. Dans ce cas de figure, la forme de crosse 60 sera portée par deux bras 61 dotés de deux formes d'œillets pour être fixés aux axes 50a et 51a comme décrit précédemment. Cette forme de crosse 60 sera dotée de deux formes de crochet 60a, parallèles, espacées l'une de l'autre, se développant chacune selon un plan géométrique vertical perpendiculaire à la rangée de poteaux, ces dites formes de crochet étant ménagées respectivement en bout des deux bras 61 et étant liées l'une à l'autre par une entretoise horizontale 60b enracinée en extrémité des dites formes de crochet 60a. Cette entretoise horizontale 60b est parallèle à la direction de la rangée de poteaux 1. L'entretoise 60b est liée à chaque forme de crochet 60b par une courbe. De cette manière, la forme de crosse 60a ne présente aucune aspérité de nature à endommager la couverture de protection 4.

Avantageusement, chaque module d'ossature 20 comprend au moins une paire de bras de déploiement formée d'un bras de déploiement gauche 201g et d'un bras de déploiement droit 201d, de mêmes longueurs, opposés, se développant tous deux dans un plan géométrique transversal perpendiculaire à la rangée de poteaux, et l'ossature 2 comprend deux éléments longiformes latéraux 21 droit et gauche fixés, pour l'élément latéral droit, à chaque bras droit 201d des modules d'ossature 20 et pour l'élément latéral gauche 21, à chaque bras gauche 201g des différents modules d'ossature 20. Selon cette disposition, la couverture de protection 4 est fixée par sa zone médiane longitudinale à l'arbre 32 d'enroulement et forme au-dessus du rang des plantes, lorsqu'elle est déployée, deux pans de couverture 4a, 4b, opposés, tangents au rouleau 32a formé par l'arbre 32 et la partie de couverture de protection 4 enroulée sur cet arbre 32. Comme on peut le voir en [Fig.8], le pan de couverture 4a ou pan inférieur se développe selon un plan géométrique inférieur tangent au rouleau 32a tandis que le pan de couverture 4b ou pan supérieur se développe selon un plan géométrique supérieur tangent au rouleau 32a. Ces deux pans de couverture 4a, 4b, lorsque la couverture de protection 4 est déployée, prennent appui sur les galets latéraux 50. Ceux-ci sont disposés à la même hauteur, mais en variante, le galet 50 prévu pour recevoir en appui le pan de couverture inférieur 4a est disposé selon un niveau de hauteur moindre que le niveau de hauteur occupé par l'autre galet latéral 50. La bande de roulement de chaque galet latéral 50 pourra être lisse, mais préférentiellement elle sera crénelée afin de réduire la surface de contact avec la couverture de protection 4 et par voie de conséquence, l'intensité du flux de chaleur entre les galets et les pans de couverture 4a, 4b. Cette disposition permet donc de réduire, essentiellement en période estivale, le risque d'altération de la couverture de protection 4 sous l'effet de la chaleur transmise par les galets 50.

L'angle d'enroulement partiel du pan de couverture inférieur 4a sur le galet 50 correspondant est relativement important et pour cette raison, ce pan de couverture 4a, sous l'effet de l'action de traction du bras de déploiement associé, en l'espèce le bras 201g, court un risque de déformation ou de détérioration au contact du galet latéral 50 correspondant. Pour réduire ce risque, l'effort de traction maximal appliqué par le bras de déploiement 201g correspondant, comparativement à l'effort maximal déployé par l'autre bras est volontairement diminué. Ainsi, les deux bras de déploiement 201g, 201d de chaque module d'ossature 20 et/ou les ressorts associés 201a ou 201c présenteront des raideurs angulaires différentes. En l'espèce, chaque bras 201g et/ou le ressort 201a ou 201c que comporte ce dernier présentera une moindre raideur angulaire que le bras 201d et/ou le ressort 201a ou 201c associé à ce dernier bras de déploiement.

Selon une autre disposition de l'invention, le galet médian 51 et le galet latéral 50 prévus pour recevoir le pan de couverture inférieur 4a tangent sont accouplés l'un à l'autre par une transmission de mouvement circulaire. Une telle disposition est de nature à réduire le frottement du pan de couverture 4a sur le galet latéral 50. Selon une forme pratique de réalisation, la transmission de mouvement est constituée par deux pignons engrenés l'un avec l'autre, formés sur les galets 50, 51 ou fixés à ces derniers.

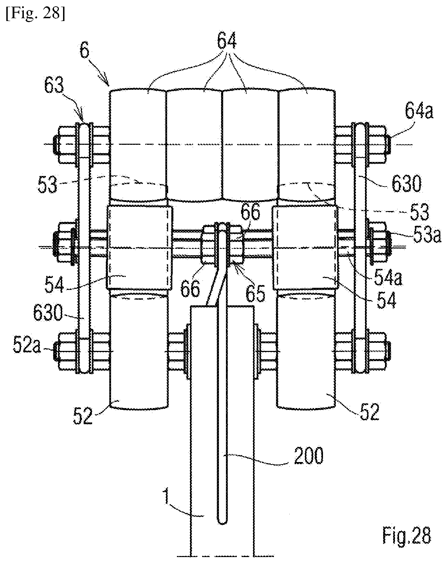

En figures 27 et 28 est représentée une autre forme de réalisation du moyen de palier 5 et du dispositif anti-soulèvement 6. Chaque moyen de palier 5 est formé d'au moins un galet central inférieur 52 monté en rotation sur un axe 52a fixé à la tête de guidage 200 dans un œillet dédié de cette dernière et s'étendant parallèlement à l'arbre d'enroulement 32, d'une butée latérale gauche formée par au moins un galet 53 monté en rotation sur un axe 53a fixé à la tête de guidage 200 dans un œillet dédié de cette dernière et s'étendant parallèlement à l'arbre d'enroulement 32 et d'une butée latérale droite formée par au moins un galet 54 monté en rotation sur un axe 54a fixé à la tête de guidage 200 dans un œillet dédié de cette dernière et s'étendant parallèlement à l'arbre d'enroulement 32. Le moyen anti-soulèvement 6 est constitué par une structure de balancier 63 articulée à l'axe support52a du ou de chaque galet central inférieur 52 et par au moins un galet 64 porté de manière libre en rotation par la structure de balancier 63. Les galets 52, 53, 54 forment un berceau prévu pour accueillir le rouleau 32a Le galet 64 du moyen anti-soulèvement est disposé au-dessus du berceau formé et donc du rouleau 32a ce dernier étant formé par l'arbre d'enroulement 32 et la partie enroulée de la couverture de protection 4. Les axes géométriques de rotation des différents galets 52, 53, 54 et 64 sont parallèles à l'axe de rotation de l'arbre d'enroulement 32. Les différents galets 52, 53, 54 et 64 définissent un logement accueillant le rouleau 32a formé par l'arbre d'enroulement 32 et la partie enroulée de la couverture de protection 4. Ce logement est suffisamment important pour y permettre des mouvements radiaux d'amplitudes limitées dudit rouleau 32a. Cette disposition, combinée avec la flexibilité de la tête de guidage 200, cette dernière étant réalisée en fil métallique, permet au rouleau 32a de s'orienter correctement dans le moyen de palier 5 et écarte tout risque de blocage.

Préférentiellement, le ou chaque galet 64 du moyen anti-soulèvement 6, le ou chaque galet central inférieur 52, le ou chaque galet de l'une des butées latérales, par exemple la butée latérale gauche, sont de mêmes diamètres. Le ou chaque galet 54 de la butée latérale droite est préférentiellement d'un diamètre inférieur.

Le pan inférieur de couverture 4a repose sur le ou sur chaque galet 53 de la butée latérale gauche tandis que le pan supérieur de couverture 4b s'enroule partiellement autour du ou de chaque galet 64 que comporte le moyen anti-soulèvement 6. Le moyen anti-soulèvement 6 est sollicité vers ou en éloignement de la butée latérale gauche par un mécanisme de came 65 agissant sur la structure de balancier 63. Cette disposition permet d'ajuster l'écart entre le moyen anti-soulèvement et la butée latérale gauche pour éviter de pincer le pan de couverture 4a.

La structure de balancier 63 comprend deux balanciers 630 parallèles disposés en vis à vis l'un de l'autre, articulés chacun à l'une des deux extrémités de l'axe support 52a du ou de chaque galet central inférieur 52 et réunis l'un à l'autre par un axe support 64a fixé à leur autre extrémité, sur lequel est monté en rotation le ou chaque galet 64.

Chaque balancier 630 épouse sensiblement la forme d'un U. De préférence, chaque extrémité de chaque balancier 630 est agencé en œillet. Par l'un des œillets, le balancier est articulé à l'axe support 52a, et par l'autre œillet, il reçoit en fixation l'axe 64a. Préférentiellement, l'œillet par lequel chaque balancier 630 est articulé à l'axe support 52a du ou de chaque galet central inférieur 52, présente un diamètre interne plus important que celui dudit axe. Cette disposition, en autorisant un débattement radial suffisamment important du balancier 630 par rapport à l'axe support 52a, est de nature à assurer une indépendance limitée de chaque balancier 630 par rapport à l'autre et d'assurer l'uniformité de l'écart entre la butée latérale gauche et le ou les galets 64 du moyen anti-soulèvement 6.

Avantageusement, le mécanisme de came 65 est formé par l'axe 54a du ou des galets 54 de la butée latérale droite. À cet effet, selon une première forme de réalisation, cet axe 54a, en son milieu, est légèrement coudé et par ses deux zones d'extrémité vient en appui contre la structure de balancier 63. De surcroît, cet axe 54a, par sa zone centrale, est monté avec possibilité de rotation dans l'œillet correspondant de la tête de guidage 200 et reçoit de part et d'autre de l'œillet qui l'accueille, des écrous 66 de manœuvre en rotation. Ces écrous 66 de manœuvre sont immobilisés sur l'axe 54a et s'opposent à son déplacement axial. Le déplacement de l'axe 54a en rotation se traduit par le déplacement angulaire du balancier et par l'ajustement de l'écart entre les galets53 de la butée latérale gauche et le moyen anti-soulèvement 6. Cet écart doit être suffisant pour éviter tout laminage de la couverture de protection 4.

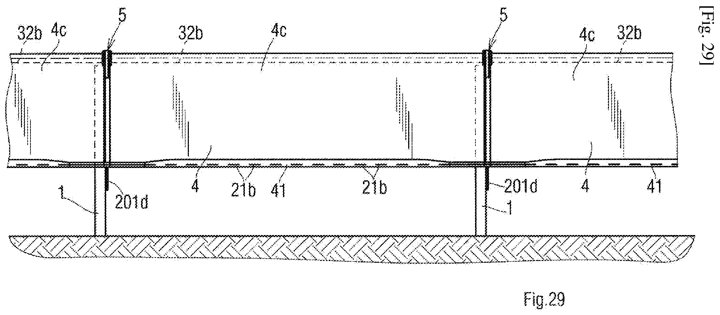

En [Fig.29] est représentée une autre forme de réalisation de l'installation selon l'invention. On remarque que cette installation est dotée de goulottes 41 latérales de récupération des eaux et que les bordures longitudinales de la couverture de protection 4 sont formées chacune par un ourlet. Chaque élément longiforme latéral 21 est engagé, comme décrit précédemment, dans une succession de perçages traversants, équidistants, pratiqués dans la bordure correspondante de la couverture et forme une alternance de bourrelets supérieurs 21a et inférieurs 21b. Selon cette variante d'exécution la couverture de protection 4 que comporte l'installation est segmentée et chaque segment 4c de couverture est adapté à couvrir une travée et forme deux pans de segment de couverture supérieur et inférieur. Par ailleurs, l'arbre d'enroulement 32 est formé de tronçons d'arbre 32b accouplés les uns aux autres au niveau des moyens de palier 5 de guidage de la façon décrite précédemment, par des organes d'accouplement 321, chaque organe d'accouplement 321 s'étendant au travers du moyen de palier 5 qui l'accueille et forme deux débords axiaux de part et d'autre de ce dernier. Ces organes d'accouplement 321 sous forme d'axes prismatiques sont montés en libre coulissement tant dans le moyen de palier qui les porte que dans les tronçons d'arbre 32b correspondants. Les tronçons d'arbre 32b associés à un même moyen de palier 5, sont axialement écartés de ce moyen de palier 5 pour des raisons qui apparaitront plus loin tout en étant solidarisé à l'organe d'accouplement 321 correspondant. Une paire de profilés de liaison 23 est disposée à l'intervalle entre deux travées consécutives chaque profilé de liaison 23 étant associé à au moins un bras de déploiement 201g ou 201d.

Chaque tronçon d'arbre 32b reçoit un segment de couverture 4c et forme avec ce dernier un tronçon de rouleau d'enroulement amovible. Une telle disposition permet le remplacement aisé de chaque tronçon de rouleau puisque pour la dépose de ce dernier il suffit de dégager du tronçon d'arbre d'enroulement, le ou chaque organe d'accouplement 321 qui le lie au ou chaque tronçon d'arbre 32b adjacent. L'élément d'alimentation 33, si présent, sera formé de tronçons d'élément d'alimentation accouplés les uns aux autres de manière séparable, par exemple par des formes d'embouts mâles et femelles pratiqués à leurs extrémités. Enfin, chaque élément longiforme latéral 21 est segmenté et chaque segment d'élément longiforme latéral est lié par chacune de ses deux extrémités au profilé de liaison 23 correspondant, de préférence par un organe de fixation sous forme de crochet. De préférence, deux segments d'éléments longiformes 21 adjacents se croisent au niveau du profilé de liaison 23 correspondant.

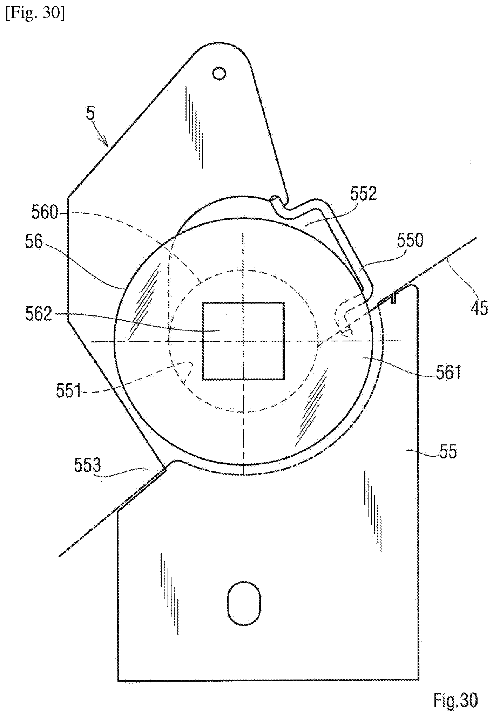

En [Fig.30] est représenté un moyen de palier 5 propre à équiper de préférence une installation segmentée. Ce moyen de palier 5 est de préférence formé d'un corps de palier 55, doté d'un alésage cylindrique traversant 551 associé à une ouverture d'introduction 552 radiale, latérale, inclinée vers le haut et d'une bague tournante 56 montée en rotation dans l'alésage 551 du corps de palier 55. Le corps de palier 55 et/ou la bague tournante 56 sont réalisés en un matériau antifriction. La bague tournante 56 est introduite dans l'alésage 551 du corps de palier 55 par passage au travers de l'ouverture radiale 552. Le corps de palier 55 est de préférence formé par une platine rectangulaire, et est prévu pour être fixé en extrémité supérieure du poteau correspondant.

Préférentiellement, la bague tournante 56 est formée d'une portée cylindrique de guidage 560 montée en rotation dans l'alésage du corps de palier 55 et de deux flasques latéraux 561 sous forme de disques circulaires, liés à la portée cylindrique et prévus pour venir de part et d'autre du corps de palier 55. De plus, la bague tournante 56 est dotée d'un perçage traversant central 56 de même section droite que celle de chaque organe d'accouplement 131 pour recevoir en accouplement l'un de ces derniers. De préférence cette section droite épouse un profil carré. Les flasques latéraux 561 de la bague tournante 56 présentent un diamètre supérieur au diamètre maximal du rouleau 32a afin d'écarter du corps de palier 55, les segments 4c de couverture adjacents. De cette manière, ces segments 4c de couverture, lors de l'enroulement ou du déroulement prennent appui latéralement sur une partie tournante à savoir les flasques latéraux 561 de la bague tournante 56 et non sur une partie fixe à savoir le corps de palier 55. On réduit ainsi les risques d'usure par frottement des segments 4c de couverture.

De préférence, l'ouverture radiale 552 du corps de palier 55, reçoit une épingle 550 de maintien de la bague tournante 56 dans l'alésage 551 du corps de palier 55.

De préférence le corps de palier 55 est doté d'une entaille latérale 553 opposée à l'ouverture latérale, cette entaille latérale, lorsque l'ossature est en position repliée, étant prévue pour accueillir le profilé de liaison 23 porté par le bras de déploiement le plus court. Dans cette situation, le profilé de liaison 23 porté par l'extrémité du bras de déploiement le plus long se positionne quant à lui en regard de l'ouverture radiale 552.

Comme dit précédemment, chaque bras de déploiement 201g, 201d présente une branche proximale et une branche distale cintrée séparée de la précédente par un coude, cette branche distale étant engagée dans un profilé de liaison 23 recevant en fixation la couverture de protection 4. Pour ce qui concerne une installation segmentée, chaque profilé de liaison 23 est disposé à l'intervalle entre deux travées consécutives.

Avant mise en place de la couverture il est nécessaire que les bras 201g, 201d, associés à un même pan de couverture soit maintenus à distances adéquate les uns des autres. Pour ce faire, ces bras seront fixés par leur spire jointive 201f à un même câble inextensible courant sur toute la longueur du rang. Ce câble sera ôté après mise en place de la couverture. Cette disposition est propre à favoriser un enroulement et un déroulement uniforme sans faux plis de la couverture de protection 4.

Pour obturer l'intervalle entre deux travées successives et donc entre les parties déroulées des segments 4c de couverture adjacents de deux travées adjacentes est prévu un moyen d'étanchéité, enroulable, s'étendant depuis l'organe d'accouplement 321 associé au moyen de palier 5 correspondant jusqu'aux profilés de liaison 23. Selon la forme préférée de réalisation, ce moyen d'étanchéité s'étend sous les segments 4c de couverture adjacents, au contact de ces derniers, mais en variante, il pourra s'étendre au-dessus de ces segments 4c toujours au contact de ces derniers. Ce moyen d'étanchéité, lorsque la couverture est déployée en partie ou en totalité, s'oppose à l'introduction d'eau de pluie au travers de l'intervalle entre deux travées adjacentes, c'est à dire dans l'intervalle entre les segments 4c de couverture adjacents.

Selon une forme préférée de réalisation, ce moyen d'étanchéité est formé de deux paires de bavettes 42 d'étanchéité couvrant pour l'une l'intervalle entre deux les parties déroulées des deux pans gauches adjacents de couverture et pour l'autre les deux pans droits de couverture en étant recouvertes en partie par les dits pans tout en étant au contact des faces inférieures de ces derniers. Ces bavettes d'étanchéité 42 de chaque paire de bavettes sont disposées de part et d'autre du moyen de palier 5 correspondant et sont fixées à l'organe d'accouplement 321 associé à ce moyen de palier. Chaque bavette 42 d'étanchéité est formée d'une bande rectangulaire d'un matériau souple étanche à l'eau. Chaque bavette 42 est fixée à l'arbre d'enroulement 32 et s'étend jusqu'à l'élément longiforme latéral 21 correspondant. Plus particulièrement cette bavette est fixée au profilé de liaison correspondant 23 et s'enroule sur ce dernier.

Chaque paire de bavette 42 d'étanchéité est associée à un élément de resserrement 43, dédié, apte à maintenir les deux bavettes par leur bord en vis à vis de leur partie déroulée, rapprochées l'une de l'autre et dans une relation de coplanarité, et ce par action sur leur ou l'un de leur bord opposé 420 et sur leurs faces supérieure et inférieure. Le bord opposé 420 de chaque bavette 42 sur lequel agit l'élément de resserrement 43 pourra être parallèle à l'axe géométrique longitudinal de cette bavette 42 ou bien être oblique. Dans ce cas de figure, ce bord s'écartera progressivement de l'axe longitudinal médian de ladite bavette depuis le profilé de liaison 23 vers l'arbre d'enroulement 32. Ce bord oblique pourra résulter de la formation d'une fente pratiquée dans la bavette 42.

Chaque élément de resserrement 43 reçoit en coulissement les deux bavettes associées et plus particulièrement la partie déroulée de chacune de ces dernières. Cet élément de resserrement 43, ([Fig.34] et 35) formé par pliage d'un fil métallique, présente une forme de boucle fermée aplatie et deux pattes 432, longiformes, de préférence rectilignes, s'éloignant de la forme de boucle et disposées selon le plan géométrique contenant ladite forme de boucle. La forme de boucle occupe une position perpendiculaire à l'axe longitudinal des deux bavettes 42 associées et assure le maintien en relation de coplanarité des parties déroulées des deux bavettes 42 l'une par rapport à l'autre.

La forme de boucle fermée présente une branche supérieure 430 longiforme, rectiligne, dont les deux extrémités coudées sont prolongées parallèlement à la branche supérieure 430 par deux branches inférieures 431, de mêmes longueurs, parallèles, longiformes, rectilignes, disposées en vis à vis de la branche supérieure 430. Ces deux branches inférieures se chevauchent sur une partie de leur longueur et sont liées l'une à l'autre par une bride 433. Ces deux branches inférieures 431 sont prolongées à angle droit par les deux pattes 432.

Les deux pattes 432, de mêmes longueurs, parallèles l'une à l'autre, sont dotées chacune en extrémité libre d'un œillet d'articulation à un axe porté par une platine fixée au le poteau 1 correspondant. Ces pattes élastiques 432 se disposent de part et d'autre de la platine à laquelle elles sont fixées.

Les deux bavettes 42 d'étanchéité, associées à un même élément de resserrement 43, prennent appui par leur face inférieure, sur les deux branches inférieures 431 de cet élément 43 et lors du déploiement et du repliement de l'ossature et de la couverture, glissent sur ces branches inférieures 431. La présence des bavettes 42 d'étanchéité a pour effet de relever l'extrémité de chaque goulotte et de créer ainsi un obstacle à la circulation de l'eau d'une travée à l'autre.

Avantageusement, chaque moyen d'étanchéité, tel que défini, sous chaque paire de bavette d'étanchéité 42, au droit de l'interstice entre les deux bavettes 42 de ladite paire, comporte, une bavette de liaison, d'étanchéité 45, s'étendant entre le moyen de palier 5 et le profilé de liaison 23 correspondant, cette bavette 45 étant fixée à ces deux éléments. En outre, cette bavette de liaison 45 pourra être fixée par sa zone médiane dans la boucle que présente l'élément de resserrement 43. Plus particulièrement en vue de cette fixation cette bavette de liaison 45 sera engagée dans la bride 433.

Selon une autre forme de réalisation, la bavette de liaison 45 est engagée librement dans la boucle que présente l'élément de resserrement 43, est ensuite engagée autour d'un lien élastique fixé au profilé de liaison 23 et est ensuite fixée par son extrémité libre par un crochet à elle-même ou bien à l'élément de resserrement 43. La bavette de liaison 45 se présentera sous la forme d'une bande rectangulaire souple, étanche à l'eau ou bien sous la forme d'un filet à mailles fines, enduit, pour s'opposer au passage de la pluie par formation d'un voile d'eau.

Selon une forme préférée de réalisation la bavette de liaison 45 s'étend de part et d'autre du moyen de palier 5 et est fixée aux deux profilés de liaison 23, associés aux deux paires de bavettes 42. Selon cette forme de réalisation, la bavette de liaison 45 présente une ouverture médiane par laquelle elle est engagée autour du moyen de palier 5 et plus particulièrement autour du corps de palier 55 de ce dernier. De plus par les berges de cette ouverture, la bavette de liaison 45 est engagée dans des fentes pratiquées dans le corps de palier 55 afin d'être fixée à ce dernier.

Le ou chaque bras de déploiement 201g', 201d', associé à chaque poteau 1 d'extrémité de rangée est de préférence rigide et conformé en U. Ce bras de déploiement est articulé par l'extrémité de chacune de ses deux branches basales au poteau 1, et plus particulièrement à un axe horizontal traversant fixé à ce poteau. À la branche basale de ce bras, est fixé par tout moyen connu, l'élément longiforme latéral 21 correspondant.

L'arbre 32 d'enroulement en bout de rang de plantes est accouplé à un organe moteur, de préférence par une transmission de mouvement. L'organe moteur est porté ou monté dans une structure de maintien 9 implantée en bout de rangée dans un massif approprié.

Selon une première forme de réalisation non représentée, l'organe moteur est constitué par un moteur électrique ou hydraulique à arbre de sortie rotatif et la transmission de mouvement est constituée par un arbre de transmission, éventuellement télescopique accouplé à l'arbre 32 d'enroulement et à l'arbre de sortie du moteur, par des joints cardan ou équivalents. Selon cette forme de réalisation, la structure de maintien 9 du moteur comprend un piètement portant au-dessus du sol une sellette horizontale dotée de moyens connus en soi de fixation de l'organe moteur. Avantageusement, la position en hauteur de la sellette au-dessus du sol est telle que l'arbre de sortie du moteur est situé sensiblement dans l'alignement de l'arbre 32 d'enroulement du moyen 3 de manœuvre de l'ossature 2.

Selon une forme préférée de réalisation, l'organe moteur est du type linéaire. Cet organe moteur peut être constitué par un vérin à vis, mais selon une forme préférée de réalisation, cet organe moteur est constitué par un vérin hydraulique 7. Celui-ci est positionné verticalement et est alimenté en énergie hydraulique par un groupe motopompe 8 associé à un réservoir 83 de fluide hydraulique. Comme on peut le voir, ce vérin hydraulique 7 comporte une tige 70, un corps 71, une chambre avant 7a, contenant la tige et une chambre arrière 7b séparée de la chambre avant par un piston 70b fixé en extrémité de la tige 70. La chambre arrière 7b du vérin est en communication soit avec l'atmosphère soit avec le réservoir 83 par un ou des perçages radiaux 7d pratiqués de manière traversante dans le corps 71 en partie inférieure de ce dernier au plus près de sa paroi terminale de fond. Le vérin hydraulique 7 est fixé par son corps dans une structure de maintien 9, laquelle assure le guidage en translation de sa tige 70 et l'immobilisation en rotation de cette dernière autour de son axe longitudinal. Cette structure de maintien 9 est par exemple formée d'un ou plusieurs montants verticaux 90 correctement entretoisés.

La transmission de mouvement associée est de préférence du type réversible et est apte à transformer le mouvement linéaire de la tige du vérin en un mouvement de rotation communiqué à l'arbre 32 d'enroulement. La position d'extension maximale du vérin hydraulique 7 correspond au déploiement de l'ossature 2 et de la couverture de protection 4 au-dessus du rang de plantes. Inversement, la position de rétraction maximale du vérin hydraulique 7 correspond à la position basse de la tige 70 dudit vérin et à la position repliée de l'ossature 2 et de la couverture de protection 4.

Le maintien en pression de la chambre avant 7a du vérin hydraulique 7, lorsque la tige 70 est en position de rétraction maximale dans le corps 71 du vérin assure le maintien dans l'état replié tant de l'ossature 2 que de la couverture de protection 4. Dans cette situation, les bras de déploiement 201d et 201g et/ou les ressorts 201a ou 201b associés sont tendus et sollicitent l'ossature 2 et la couverture de protection 4 dans le sens de leur déploiement. Ce maintien en pression est assuré par interruption de la communication entre la chambre 7a du vérin et le réservoir 83.

Par rétablissement de la communication entre la chambre avant 7a du vérin hydraulique 7 et le réservoir 83 de fluide hydraulique, les bras de déploiement 201d et 201g et/ou les ressorts 201a ou 201b associés peuvent se détendre rapidement et entraîner par l'entremise de la couverture de protection 4, l'arbre 32 d'enroulement dans le sens du déroulement. Ce mouvement de rotation imprimé à l'arbre 32 est transformé en mouvement linéaire par la transmission de mouvement et est communiqué à la tige 70 du vérin qui se trouve alors entraînée vers le haut, vers la position d'extension maximale du vérin. Il y a lieu de noter que le déploiement de l'ossature 2 et de la couverture de protection 4 s'effectue sans puissance motrice, principalement grâce à l'énergie mécanique emmagasinée dans les bras de déploiement et dans les ressorts associés 201a, 201c.

Selon une première forme de réalisation, la transmission de mouvement est formée d'une crémaillère 72 fixée à la tige 70 du vérin et s'étendant le long de cette dernière, d'un pignon denté 73, en prise avec la crémaillère 72, monté à rotation dans la structure de maintien 9 et d'un arbre de transmission 74 avec joints cardan aux deux extrémités, accouplé d'une part au pignon denté 73 et d'autre part à l'arbre 32.

Selon une forme préférée de réalisation, la structure de maintien 9 comprend un mât vertical 90, de préférence de section droite polygonale, et la transmission de mouvement est formée d'au moins une chaîne de Galle 75 fixée par une de ses deux extrémités à la partie supérieure du mât vertical 90 et par son autre extrémité à un mécanisme de mise en tension. Cette chaîne est enroulée partiellement sur un premier pignon denté 77 monté à rotation dans une chape fixée en extrémité supérieure de la tige 70 du vérin et sur un second pignon denté 78 monté fixe sur un axe 78a porté par un palier 79 fixé en extrémité supérieure du mât vertical 90, ledit pignon 78 étant accouplé à l'arbre 32, par l'entremise de l'axe 78a et d'un arbre de transmission avec joints cardan d'extrémité. Est réalisé ainsi un mouflage grâce auquel le déplacement de la tige du vérin se trouve amplifié. Ainsi, à une course donnée de cette tige 70 correspondra une course double de l'extrémité de la chaîne en prise avec le mécanisme de mise en tension. Ce dernier a pour but de maintenir la chaîne en prise avec les pignons.

Selon une forme préférée de réalisation, le mécanisme de mise en tension est formé par un contrepoids 76. Ce contrepoids 76 est préférentiellement guidé par le mât vertical 90 et pour cette raison, est doté d'un coulisseau de guidage 76a, tubulaire engagé en coulissement sur le mât vertical 90, ce dernier formant alors une colonne de guidage. Alternativement, le contrepoids 76 n'est pas guidé mais évolue dans un fût vertical pour être protégé notamment de l'action du vent. Le contrepoids 76 lorsque la chambre avant 7a du vérin hydraulique 7 est connectée au réservoir 83, a pour but d'aider au déploiement de l'ossature 2 et de la couverture de protection 4 au-dessus du rang de plantes, mais ce déploiement est principalement assuré par la détente des bras de déploiement 201g et 201d.

Préférentiellement, le vérin hydraulique 7 est alimenté en fluide hydraulique par sa tige 70, cette dernière étant creuse, et le groupe motopompe 8 est connecté hydrau-liquement, de manière étanche au vérin et plus particulièrement au volume interne de la tige 70, par un plongeur tubulaire 7c interne à ce dernier et débouchant axialement dans le volume interne de la tige 70. Ce plongeur 7c traverse axialement de manière étanche le piston 70b du vérin. Le volume interne de la tige 70 est en relation de communication avec la chambre avant 7a du vérin au travers d'au moins un perçage radial traversant 70a pratiqué dans la paroi de la tige 70 au plus près du piston 70b. Entre le plongeur tubulaire 7c et la face interne cylindrique de la tige, est ménagé un intervalle suffisant pour former un passage au fluide hydraulique. Celui-ci peut donc circuler dans ce passage entre le ou chaque perçage radial 70a et le plongeur. Cette disposition d'alimentation par la tige 70 évite l'usage de conduites d'alimentation et de retour externes au vérin hydraulique 7, susceptibles d'être arrachées ou détériorées par les engins agricoles et autres.

Comme dit précédemment, la chambre avant 7a du vérin est alimentée en fluide hydraulique par l'intermédiaire du volume interne de la tige 70. De ce fait, dans la chambre avant 7a, règne une pression sous l'effet de laquelle la tige 70, par l'intermédiaire du piston 70b, est sollicitée dans le sens de sa rétraction dans le corps 71 du vérin alors que la pression régnant dans son volume interne la sollicite dans le sens de son déploiement. Ainsi, cette tige 70 est soumise à deux efforts axiaux contraires. Pour que cette tige 70 puisse tout de même se rétracter dans le corps du vérin lorsque la chambre 7a est alimentée en fluide hydraulique, l'aire de la surface annulaire du piston 70b que ce dernier présente dans la chambre avant 7a est supérieure à l'aire de la section droite interne de la tige 70. L'avantage de cette disposition est de réduire la valeur de la vitesse de rétraction de la tige 70 et donc la vitesse de repliement de l'ossature 2 et de la couverture de protection 4.

Le groupe motopompe 8 comprend un moteur électrique 80 et une pompe hydraulique 81 possédant un orifice d'admission et un orifice de refoulement. Le moteur électrique 80 comporte un arbre de sortie rotatif auquel est accouplée la pompe hydraulique 81. Selon la forme préférée de réalisation, la pompe hydraulique 81 et la partie inférieure du vérin hydraulique 7 sont immergées dans le réservoir 83 de fluide hydraulique. Selon cette configuration, les orifices radiaux 7d ménagés dans le corps du vérin en partie inférieure de ce dernier assurent une communication permanente entre la chambre arrière du vérin et le réservoir 83.

La pompe hydraulique 81 est apte à propulser le fluide hydraulique depuis son orifice d'admission vers son orifice de refoulement et inversement, depuis son orifice de refoulement vers son orifice d'admission, l'arbre de sortie du moteur électrique 80 pouvant être entraîné en rotation dans un sens ou dans l'autre. Préférentiellement, la pompe hydraulique 81 est du type à engrenages et les éléments actifs de cette dernière, comme connu, sont formés par deux roues dentées de mêmes caractéristiques dimensionnelles, engrenées l'une avec l'autre, dont une est en prise directe avec l'arbre de sortie du moteur électrique 80. Comme on peut le voir en [Fig.14], la pompe hydraulique 81 par son orifice d'admission est connectée par une voie hydraulique 82 d'admission, au réservoir 83 de fluide hydraulique, et par son orifice de refoulement à une voie d'alimentation 84 connectée au tube plongeur 7c.

Lorsque les engrenages de la pompe 81 sont entraînés dans le sens usuel de fonctionnement, le fluide hydraulique pompé dans le réservoir 83 par l'intermédiaire de la voie d'admission 82 pénètre dans la pompe par l'orifice d'admission de cette dernière, s'en échappe par l'orifice de refoulement et est dirigé vers la chambre avant 7a du vérin par l'intermédiaire de la voie d'alimentation 84, du tube plongeur 7c, de la tige 70 du vérin et du ou de chaque perçage radial 70a. Sous l'effet de l'action du fluide hydraulique dans la chambre 7a, la tige 70 du vérin se rétracte dans le corps 71 du vérin entraînant ainsi le repliement de l'ossature 2 et de la couverture de protection 4. Le maintien en pression de la chambre avant 7a du vérin assure le maintien dans l'état replié, tant de l'ossature 2 que de la couverture de protection 4. Ce maintien en pression est assuré par la présence d'un clapet anti-retour 84a installé sur la voie d'alimentation 84.

L'entraînement des engrenages de la pompe 81 dans le sens inverse, sur un intervalle de temps relativement bref et donc avec une très faible consommation énergétique, force le transfert d'une faible quantité de fluide hydraulique vers l'orifice de refoulement de la pompe 8 depuis le réservoir 83 par l'entremise d'une seconde voie d'admission 85 en relation de communication avec le réservoir 83 et raccordée à la voie d'alimentation 84 en amont du clapet anti-retour 84a. Le fluide hydraulique débité par la pompe 8 au travers de son orifice d'admission agit par l'entremise d'une voie de commande 86a sur le pilote d'un clapet anti-retour 87 piloté installé sur une voie de décharge 86 établie entre la chambre avant 7a du vérin et le réservoir 83. Le pilote du clapet anti-retour 87 est raccordé à la voie d'admission 82 par la voie de commande 86a.

En l'absence de pression hydraulique significative sur son pilote, le clapet anti-retour 87 interdit tout transfert de fluide hydraulique depuis la chambre avant 7a du vérin vers le réservoir 83 par l'entremise de la voie de décharge 86. En revanche, lorsque son pilote est actionné par le fluide hydraulique via la voie de commande 86a, le clapet anti-retour 87 s'ouvre et établit la communication entre la chambre avant 7a du vérin et le réservoir 83 via la voie de décharge 86. La tige 70 de ce vérin n'est plus immobilisée en position inférieure dans le corps 71 du vérin de sorte que l'ossature 2 et la couverture de protection 4 peuvent se déployer sous l'effet de la détente des bras de déploiement 201d et 201g et/ou des ressorts 201a ou 201b associés et/ou du ou de chaque contrepoids 76. On comprend donc qu'une faible rotation des engrenages de la pompe selon le sens de rotation inverse au sens usuel de fonctionnement, limitée par exemple à une fraction de tour, force, sans dépense significative d'énergie, l'ouverture de la voie de décharge 86 et permet le déploiement rapide de l'ossature 2 et de la couverture de protection 4 sous l'effet principalement de la détente des bras de déploiement 201g et 201d.

Comme on peut le voir en [Fig.14], sur la seconde voie d'admission 85 est installé un clapet anti-retour 85a interdisant tout écoulement de fluide hydraulique depuis la pompe vers le réservoir 83, par l'entremise de ladite voie d'admission 85, lorsque la pompe 8 débite dans la voie d'alimentation 84 pour alimenter la chambre avant 7a du vérin hydraulique 7. De même, un clapet anti-retour 82a est installé sur la voie d'admission 82. Ce clapet anti-retour est situé entre le réservoir 83 et le point de raccordement de la voie de commande 86a à la voie hydraulique d'admission 82. Enfin seront prévus plusieurs équipements de sécurité tels que clapets de décharge 82b, 84b aptes à permettre un écoulement direct du fluide hydraulique vers le réservoir 83 en cas de surpression dans les voies auxquelles ils sont associés. Comme on peut le voir, le clapet de décharge 82b est connecté à la voie d'admission 82 en aval du clapet anti-retour 82a en considérant le sens usuel de circulation du fluide hydraulique dans cette voie. Le clapet de décharge 84b est raccordé à la voie d'alimentation 84 en amont du clapet anti-retour 84a en considérant le sens usuel de circulation du fluide hydraulique dans cette voie, le sens usuel étant défini comme étant le sens d'alimentation de la chambre 7a du vérin hydraulique 7.

La course de la tige 70 du vérin 7 et la raison de la transmission de mouvement couplée à cette tige 70 seront calculées afin que la position maximale d'extension de ladite tige corresponde au complet repliement de l'ossature 2 et de la couverture de protection 4 et que la position maximale de rétractation de la tige 70 dans le corps 71 du vérin corresponde au complet déploiement de l'ossature 2 et de la couverture de protection 4. Est évité ainsi l'usage de capteur de fin de course.

En [Fig.24] est représentée schématiquement une autre forme de réalisation du moyen moteur d'entraînement en rotation de l'arbre d'enroulement 32. On peut voir sur cette figure que ce moyen comprend un motoréducteur 95 comportant deux arbres de sortie 950, alignés, opposés, ne formant qu'un, fixés à un même rotor à double sens de rotation, prévus pour être accouplés, à la demande, chacun par une transmission de mouvement dédiée et par un mécanisme d'embrayage 98 dédié, à l'arbre d'enroulement 32. Ce moyen moteur comporte ainsi deux transmissions de mouvement, lesquelles sont de raisons différentes, chacune d'elles étant associée à un mécanisme d'embrayage 98 dédié. L'une de ces deux transmissions est propre à l'entraînement, selon une vitesse de rotation élevée, de l'arbre 32 dans le sens du déploiement de la couverture de protection 4 et l'autre, à l'entraînement, selon une vitesse de rotation moindre, de l'arbre 32 dans le sens du repliement de la couverture 4. Les deux mécanismes d'embrayage 98 sont fonctionnellement associés l'un à l'autre en sorte que l'activation de l'un entraîne la désactivation de l'autre et inversement. L'un des deux mécanismes d'embrayage 98 est activé lorsque la rotation des deux arbres de sortie 950 s'effectue dans le sens horaire, l'autre mécanisme d'embrayage 98 est activé lorsque la rotation des deux arbres de sortie 950 s'effectue dans le sens antihoraire.

Chaque transmission de mouvement comprend un pignon menant 96 monté de manière coulissante sur l'arbre de sortie 950 correspondant du motoréducteur 95, et un pignon mené 97, de diamètre différent, fixé à l'arbre d'enroulement 32, et engrené avec le pignon menant 96. Le pignon mené 97 est préférentiellement fixé à la forme d'axe d'accouplement 323 que comporte l'arbre d'enroulement 32. Alternativement, les deux pignons menant 96 et mené 97 de chaque transmission sont accouplés l'un avec l'autre par une chaîne sans fin à maillons, engrenée avec chacun d'entre eux.

Chaque mécanisme d'embrayage 98 est du type à crabot et comprend une douille mobile de crabot 980 fixée au pignon menant 96 de la transmission de mouvement correspondante et engagée autour de l'arbre de sortie 950 correspondant du motoréducteur 95. Ce mécanisme d'embrayage 98 comprend de plus une douille fixe de crabot 981 engagée sur ledit arbre de sortie 950 et fixée à ce dernier. Comme on le comprend, les douilles mobile 980 et fixe 981 de crabot sont en regard l'une de l'autre. Chaque douille mobile 980 et fixe 981 de crabot est dotée de dents d'accouplement. En relation d'accouplement, c'est à dire en relation d'embrayage, les dents de l'une des douilles sont emboîtées dans les inter-dents de l'autre douille. Avantageusement les dents des deux douilles fixe 981 et mobile 980 de crabot présenteront des profils adaptés pour faciliter leur interpénétration. Ainsi ces dents pourront présenter chacune une extrémité libre arrondie ou en biseau.

À chaque mécanisme d'embrayage 98 est associé un moyen d'actionnement apte à déplacer en translation le pignon menant 96 et la douille mobile de crabot 980, sur l'arbre de sortie 950 correspondant afin d'établir une relation d'embrayage ou une relation de débrayage avec la douille fixe de crabot 981.Selon une forme pratique de réalisation, ce moyen d'actionnement comprend d'une part une portée filetée 951, à pas rapide, formée sur ledit arbre de sortie 950 et d'autre part un disque d'actionnement 99 doté d'un taraudage central traversant engagé en vissage sur la portée filetée 951. Il y a lieu de noter que les pas des portées filetées 951 pratiquées sur les arbres de sortie 950 sont de même inclinaison. Ces portées filetées 951 présenteront préférentiellement un pas à droite.

Le disque d'actionnement 99 de chaque moyen d'actionnement reçoit en périphérie des bras de traction 990 s'étendant parallèlement à l'axe longitudinal des arbres de sortie 950, ces bras de traction 990 étant dotés chacun, en extrémité libre, d'un bec de traction 991 prévu pour venir agir en traction sur une bague épaulée 960 fixée au pignon menant 96 correspondant.

Le disque d'actionnement 99 de chaque moyen d'actionnement est immobilisé en rotation par friction, par rapport au carter du motoréducteur 95 afin que la rotation des arbres de sortie 950 se traduise par le mouvement de translation de ce disque 99 sur l'arbre de sortie 950 correspondant. En fonction du sens de rotation de l'arbre de sortie 950 correspondant, le disque 99 agit en poussée sur le pignon menant 96 ou bien en traction sur ce dernier par l'intermédiaire des becs 991 des bras de traction 990 et de la bague épaulée 960. Par action de poussée, le pignon menant 96 avec sa bague épaulée 960 et la douille mobile de crabot 980 associée sont déplacés en translation sur l'arbre de sortie 950. De par ce mouvement de déplacement la douille mobile de crabot 980 s'accouple à la douille fixe de crabot 981. Par action de traction sur sa bague épaulée 960 le pignon menant 96 et la douille mobile de crabot 980 associée sont écartés de la douille fixe de crabot 981. La douille mobile de crabot 980 se trouve ainsi désaccouplée de cette douille fixe de crabot 981.

Il y a lieu de noter que les pignons menant 96 et mené 97 de chaque transmission de mouvement présentent des épaisseurs différentes afin que le pignon menant 96 ne puisse se désengrener du pignon mené 97 lors de son déplacement en translation le long de l'arbre 950 qui le porte. Les pignons menant ou mené de plus faible diamètre présenteront une épaisseur double de celle des pignons de plus grand diamètre.

Comme dit précédemment, les deux arbres 950 tournent tous deux dans le même sens et peuvent être entraînés dans le sens horaire ou dans le sens anti horaire de préférence à la même vitesse. Un de ces deux sens de rotation correspond à l'enroulement de la couverture de protection 4 tandis que l'entraînement dans l'autre sens correspond au déploiement de cette couverture. Lors de l'entraînement dans le sens horaire, le disque d'actionnement 99 de l'un des deux moyens d'actionnement, en raison de son immobilisation en rotation par rapport au carter du motoréducteur 95, est entraîné vers l'extrémité libre de l'arbre 950 qui le porte et vers une butée annulaire 952 installée à ladite extrémité libre tandis que le disque 99 de l'autre moyen d'actionnement est entraîné en éloignement de l'extrémité libre de l'arbre 950 qui le porte. Ainsi, le premier disque 99 en agissant en traction sur la bague épaulée 960 correspondante par l'entremise des becs de traction 991 portés par les bras de traction 990, force le déplacement du pignon menant 96 et désaccouple les douilles mobile 980 et fixe 981 de crabot correspondantes. De ce fait, le pignon 960 n'est plus accouplé à l'arbre de sortie 950, qui le porte, et est libre en rotation par rapport à ce dernier. La transmission de mouvement auquel ce pignon menant appartient ne peut transmettre un couple moteur entre l'arbre de sortie 950 et l'arbre d'enroulement 32. En revanche, le disque 99 de l'autre moyen d'actionnement, du fait de la rotation de l'arbre de sortie 950 et de son immobilisation en rotation par rapport au carter du motoréducteur 95, se déplace sur l'arbre 950 qui le porte. Ainsi, en s'éloignant de la butée annulaire 952 correspondante, ce disque 99 vient agir en poussée sur la bague épaulée 960 du pignon menant 96 correspondant, ce qui force l'accouplement des douilles mobile 980 et fixe 981 de crabot l'une à l'autre. Dans cette situation, le couple moteur se trouve transmis entre l'arbre de sortie 950 correspondant et l'arbre d'enroulement 32 par l'entremise des pignons menant 96 et mené 97 correspondants. Le mouvement inverse de rotation des deux arbres de sortie 950, conduit à des situations inverses.

L'immobilisation par friction de chaque disque 99 autorise cependant la rotation de ce dernier lorsque il vient au contact de la butée annulaire 952 correspondante ou lorsque la douille mobile de crabot 980 est en pression contre la douille fixe de crabot 981 sous l'effet de la poussée qu'il exerce sur cette dernière par l'entremise de la bague épaulée 960 et du pignon menant 96. De cette manière, est écarté tout risque de blocage.

Selon une forme pratique de réalisation, l'immobilisation par friction est obtenue par un jeu d'aimants 992 appliqué contre le disque 99 et porté par une structure support montée fixe en rotation par rapport au carter du motoréducteur 95 et mobile en translation par rapport à ce dernier. Cette structure support pourra être formée de tiges rigides 993 s'étendant parallèlement aux arbres de sortie 950 et montées en coulissement dans des alésages formés dans un élément lié fixement au carter du motoréducteur 95. Chaque aimant 992 sera monté fixement à l'une des deux extrémités de l'une des tiges 993.

Les positions de complet déploiement et de complet repliement de la couverture de protection 4 pourront être déterminées par un capteur angulaire 326 comme décrit précédemment. Elles pourront également être déterminées par deux contacteurs 36, actionnés tour à tour par une came 37 fixée à une roue dentée 38 en prise avec un filetage 39 adapté, formé dans une portée cylindrique de l'arbre 32. Une telle disposition est représentée en [Fig.24a]. Les contacteurs 36 seront fixés sur une structure appropriée, non représentée, montée fixement par rapport au sol.

L'installation telle que décrite sera équipée au-dessus de chaque rang d'un moyen de dissuasion s'opposant à la pose des oiseaux sur sa zone sommitale afin que ces derniers ne percent la couverture de protection 4 à la recherche des insectes prisonniers. Ce moyen de dissuasion sera constitué par un ou plusieurs éléments longiformes portés par les poteaux ou par les moyens de palier 5 à distance de quelques centimètres du rouleau 32a. Chaque élément longiforme pourra être formé par un câble, par un dôme ou bien par un chaperon longiforme suspendu à un câble porté par les moyens de palier. Ce chaperon, par l'ombre formée sur le rouleau 32a, protégera ce dernier de l'action du rayonnement solaire.

La couverture de protection 4 pourra également être équipée de lisières longitudinales opaques formées le long de ses deux bordures longitudinales. En position repliée de la couverture de protection 4, l'opacité de ces deux bordures protègera la partie transparente de ladite couverture de protection de l'action du soleil. De plus, elles masqueront les insectes prisonniers de cette couverture.

Le câble porté par les moyens de palier ou le chaperon porté par ce dernier pourront être équipé de cellules solaires aptes à transformer l'énergie solaire en courant électrique.

En outre l'installation pourra être équipée de filets de protection contre les insectes et/ou les intempéries fixés par des crochets aux bourrelets inférieurs 21b que forment les éléments longiformes latéraux 21. Ces filets de protection pourront s'étendre verticalement vers le sol et venir reposer sur le sol. Pour une installation comportant plusieurs rangs de plantes séparés par des inter-rangs, les filets pourront couvrir ces inter-rangs en étant toujours fixés par des crochets à ces organes de suspension 21b. Selon ce cas de figure, au moyen 3 de manœuvre sera associé un moyen de débrayage afin que les ossatures et les couvertures associées à un même filet puissent se déployer sous l'effet du poids des accumulations de neige ou de grêles présentes sur ce filet. Ce moyen de débrayage pourra être remplacé par des éléments sécables aptes à se rompre à partir d'efforts d'intensité calibrée.

Il est évident que l'installation selon l'invention n'est pas limitée à la protection de la vigne. Au contraire elle est destinée à protéger tout type de plantation en rangs tels que vergers et autres. Elle peut recevoir tous aménagements et variantes du domaine des équivalents techniques. L'invention est défini par les revendications ci-après.

## Revendications

1. Installation de protection des plantes cultivées en rang, comprenant :
- des poteaux (1) verticaux alignés en au moins une rangée, prévus pour être enfichés dans le sol, comportant chacun une zone supérieure (10) prévue pour être situés au-dessus de la canopée des plantes,
- une ossature (2) solidaire de la zone supérieure (10) des poteaux (1), pouvant adopter à la commande une position rétractée ou une position déployée transversalement perpendiculaire à la rangée des poteaux,
ladite ossature (2) comportant des modules d'ossature (20) chacun porté par un poteau (1) et comprenant au moins un bras de déploiement (201d, 201'd, 201g, 201'g) solidarisé au poteau correspondant par sa zone proximale de manière angulairement mobile, entre une position verticale et orientée vers le haut correspondant à la position rétractée de l'ossature, et une position horizontale ou inclinée par rapport au sol correspondant à la position déployée de l'ossature,
ladite ossature (2) comportant en outre au moins un élément longiforme latéral (21) fixé à la zone distale du ou de l'un des bras de déploiement de chaque module d'ossature (20), ledit au moins un élément longiforme latéral (21) s'étendant parallèlement à la rangée des poteaux (1) et au sol,
- une couverture de protection (4) souple présentant une face supérieure et une face inférieure, ladite couverture de protection (4) étant portée par l'ossature (2) et pouvant occuper:
- par déploiement de l'ossature (2), une position dépliée dans laquelle elle s'étend au-dessus des plantes et forme un écran protecteur,
- par rétractation de l'ossature (2), une position repliée au-dessus de la zone sommitale du rang de plantes,
- un moyen (3) de manœuvre de l'ossature (2) entre les positions déployée et rétractée et de maintien de cette dernière dans l'une ou l'autre position ou dans une position intermédiaire, ladite installation étant **caractérisée en ce que** chaque module d'ossature (20) comprend une tête de guidage (200) prévue pour le guidage du moyen (3) de manœuvre, chaque tête de guidage (200) étant fixée au poteau (1) correspondant, à distance au-dessus de l'extrémité proximale du ou de chaque bras de déploiement (201d, 201g), **caractérisé en ce que** le ou chaque bras de déploiement de chaque module d'ossature (20) est sollicité vers la position de déploiement de l'ossature (2) par des forces élastiques de rappel, internes au ou à chaque bras de déploiement (201g, 201d), ce dernier étant constitué à partir d'un élément longiforme élastique.

2. Installation selon la revendication 1, **caractérisée en ce que** la zone proximale du ou de chaque bras de déploiement (201g, 201d) est agencée en ressort (201a, 201c) à spires non jointives.

3. Installation selon la revendication 1 ou la revendication 2, **caractérisée en ce que** le ou chaque élément longiforme latéral (21) est formé par une corde élastiquement extensible.

4. Installation selon l'une quelconque des revendications précédentes, **caractérisée en ce que** :
- le moyen (3) de manœuvre de l'ossature (2) comprend un arbre d'enroulement (32) motorisé, sur lequel s'enroule la couverture de protection (4), ledit arbre (32) étant accouplé à un moyen moteur d'entraînement en rotation,
- la tête de guidage (200) de chaque module d'ossature (20) est dotée d'au moins un moyen de palier (5) supportant un rouleau (32a) formé par l'arbre d'enroulement (32) et la partie enroulée, sur cet arbre, de la couverture de protection (4), cette dernière par l'une au moins de ses deux bordures longitudinales étant fixée à un élément longiforme latéral (21) et à des profilés de liaison (23), ledit arbre (32) étant accouplé à un moyen moteur d'entraînement en rotation.

5. Installation selon l'une quelconque des revendication précédentes, **caractérisée en ce que** :
- chaque module d'ossature (20) comprend au moins une paire de bras de déploiement formée d'un bras de déploiement gauche (201g) et d'un bras de déploiement droit (201d), opposés, se développant tous deux dans un plan géométrique transversal perpendiculaire à la rangée de poteaux,
- chaque bras de déploiement (201d, 201g) est solidarisé à un profilé de liaison (23),
- l'ossature (20) comprend deux éléments longiformes latéraux (21) droit et gauche
- la couverture de protection (4) est fixée par sa zone médiane longitudinale à l'arbre d'enroulement (32) et par ses bordures longitudinales droite et gauche respectivement aux éléments longiformes latéraux (21) droit et gauche ainsi qu'aux profilés de liaison (23), ladite couverture de protection (4) formant au-dessus du rang de plantes, lorsqu'elle est déployée, deux pans de couverture (4a, 4b), opposés.

6. Installation selon l'une des revendications précédentes, **caractérisée en ce que** le ou chaque moyen de palier (5) est formé d'au moins un galet central inférieur (52) montée en rotation sur un axe (52a) fixé à la tête de guidage(200) et s'étendant parallèlement à l'arbre d'enroulement (32), d'une butée latérale gauche formée par au moins un galet (53) monté en rotation sur un axe (53a) fixé à la tête de guidage (200) s'étendant parallèlement à l'arbre d'enroulement (32), d'une butée latérale droite formée par au moins un galet (54) monté en rotation sur un axe (54a) fixé à la tête de guidage (200) s'étendant parallèlement à l'arbre d'enroulement (3) et d'un moyen anti-soulèvement (6) constitué par une structure de balancier (63) articulée à l'axe support du ou de chaque galet central inférieur (52) et par au moins un galet (64) porté de manière libre en rotation, par la structure de balancier (63), au-dessus du rouleau (32a) formé par l'arbre d'enroulement (32) et la partie enroulée de la couverture de protection (4).

7. Installation selon la revendication précédente, **caractérisée en ce que** le moyen anti-soulèvement (6) est sollicité vers ou en éloignement de la butée latérale gauche par un mécanisme de came (65) agissant sur la structure de balancier (63).

8. Installation selon la revendication 4 ou la revendication 5, **caractérisée en ce que** la couverture de protection (4) est segmentée, que chaque segment (4c) de couverture est adapté à couvrir une travée, c'est à dire la distance entre deux poteaux (1) consécutifs et que l'arbre d'enroulement (32) est formé de tronçons d'arbre (32b) accouplés les uns aux autres au niveau des moyens de palier (5) par des organes d'accouplement (321), chaque organe d'accouplement s'étendant au travers du moyen de palier (5) qui l'accueille et que chaque tronçon d'arbre (32b) reçoit un segment de couverture (4c) et forme avec ce dernier un tronçon de rouleau d'enroulement amovible.

9. Installation selon la revendication précédente, **caractérisée en ce que** :
- chaque moyen de palier (5) est formé d'un corps de palier (55) doté d'un alésage cylindrique traversant associé à une ouverture d'introduction radiale, latérale, inclinée vers le haut et d'une bague tournante (56) montée en rotation dans l'alésage du corps de palier (55),
- la bague tournante (56) est formée d'une portée cylindrique de guidage (560) montée en rotation dans l'alésage du corps de palier (55) et de deux flasques latéraux (561), sous forme de disques circulaires, liés à la portée cylindrique et prévus pour venir de part et d'autre du corps de palier,
- la bague tournante (56) est dotée d'un perçage traversant de même section droite que celle de chaque organe d'accouplement (131) pour recevoir en accouplement l'un de ces derniers,
- les flasques latéraux (561) de la bague tournante (56) présentent un diamètre supérieur au diamètre maximal du rouleau (32a) afin d'écarter du corps de palier, les segments (4c) de couverture adjacents.

10. Installation selon la revendication 8 ou la revendication 9, **caractérisée en ce que** dans l'intervalle entre deux travées successives est disposé au moins un moyen d'étanchéité enroulable, s'opposant à l'introduction d'eau de pluie au travers dudit intervalle lorsque la couverture de protection est déployée en partie ou en totalité.

11. Installation selon la revendication précédente, **caractérisée en ce que** les tronçons d'arbre (32b) associés à un même moyen de palier (5), sont axialement écartés de ce moyen de palier (5) et que chaque moyen d'étanchéité est formé de deux paires de bavettes (42) d'étanchéité couvrant pour l'une l'intervalle entre deux les deux pans gauches adjacents de couverture de protection (4) et pour l'autre les deux pans droits en étant recouvertes en partie par les dits pans tout en étant au contact des faces inférieures de ces derniers, chaque bavette (42) étant fixée d'une part à l'organe d'accouplement (321) associé audit moyen de palier (5) et d'autre part au profilé de liaison (23) correspondant.

12. Installation selon la revendication précédente, **caractérisée en ce que** chaque paire de bavette (42) d'étanchéité est associée à un élément de resserrement (43), dédié, apte à maintenir les deux bavettes (42) par leur bord en vis à vis de leur partie déroulée, rapprochées l'une de l'autre et dans une relation de coplanarité, et ce par action sur leur ou l'un de leur bord opposé (420) et sur leurs faces supérieure et inférieure.

13. Installation selon la revendication 12, **caractérisée en ce que** chaque moyen d'étanchéité comporte sous chaque paire de bavette d'étanchéité (42) et au droit de l'interstice entre les deux bavettes (42) de ladite paire, une bavette de liaison (45), d'étanchéité (45), s'étendant entre le moyen de palier (5) et le profilé de liaison (23) correspondant, ladite bavette (45) étant portée par l'élément de resserrement (43).

14. Installation selon l'une quelconque des revendications précédentes, **caractérisée en ce que** le moyen (3) de manœuvre de l'ossature (2) est apte à assurer un repliement lent de ladite ossature et de la couverture de protection (4), et un déploiement rapide de ces dernières.

15. Installation selon l'une quelconque des revendications précédentes, **caractérisée en ce que** :
- l'arbre d'enroulement (32) est tubulaire, est prolongé axialement par une forme d'axe d'accouplement (323), tubulaire, par laquelle il est accouplé au moyen moteur d'entraînement en rotation,
- le moyen moteur d'entraînement en rotation comprend un motoréducteur (95) comportant deux arbres de sortie (950) alignés, opposés fixés à un même rotor à double sens de rotation, prévus pour être accouplés à la demande à l'arbre d'enroulement (32), chacun par une transmission de mouvement dédiée et par un mécanisme d'embrayage (98) dédié,
- les deux transmissions de mouvement sont de raisons différentes, l'une des deux transmissions étant propre à l'entraînement, selon une vitesse de rotation élevée, de l'arbre (32) dans le sens du déploiement de la couverture de protection (4) et l'autre à l'entraînement, selon une vitesse de rotation moindre dans le sens du repliement de la couverture (4),
- chaque transmission de mouvement comprend un pignon menant (96) calé sur l'arbre correspondant du motoréducteur, un pignon mené (97) de diamètre différent, calé sur la forme d'axe d'accouplement (323), et engrené avec le pignon menant (96),
- les deux mécanismes d'embrayage (98) sont fonctionnellement associés l'un à l'autre en sorte que l'activation de l'un entraîne la désactivation de l'autre et inversement, l'un des deux mécanismes d'embrayage (98) étant activé lorsque la rotation des deux arbres de sortie (950) s'effectue dans le sens horaire, l'autre mécanisme d'embrayage (98) étant activé lorsque la rotation des deux arbres de sortie (950) s'effectue dans le sens antihoraire.

16. Installation selon l'une quelconque des revendications précédentes, comportant plusieurs rangs séparés par des inter-rangs, **caractérisée en ce que** :
- le ou chaque élément longiforme latéral (21) est fixé à la couverture de protection (4) par engagement dans une succession de perçages traversants, équidistants pratiqués dans la bordure correspondante de la couverture de protection (4), à distance du bord longitudinal de cette bordure, ledit élément longiforme latéral (21) formant une alternance de bourrelets supérieurs (21a), et inférieurs (21b), formant respectivement saillies sur la face supérieure de la couverture de protection (4) et sur la face inférieure de cette dernière,
- elle comporte des filets de protection fixés par des crochets aux bourrelets (21b) que forment les éléments longiformes latéraux (21),
- les filets de protection couvrent les inter-rangs et qu'au moyen (3) de manœuvre est associé un moyen de débrayage afin que les ossatures et les couvertures associées à un même filet puissent se déployer sous l'effet du poids des accumulations de neige ou de grêles présentes sur ce filet.

## Patentansprüche

1. Pflanzenschutzeinrichtung für in Reihen angebaute Pflanzen, welches umfasst:
- vertikale Pfosten (1), die in mindestens einer Reihe angeordnet sind und dazu bestimmt sind, in den Boden eingelassen zu werden, worin jeder Pfosten einen oberen Bereich (10) aufweist, der dazu bestimmt ist, sich oberhalb des Pflanzendaches zu befinden,
- ein mit dem oberen Bereich (10) der Pfosten (1) fest verbundenes Gerüst (2), das eine eingezogene oder eine ausgefahrene Position quer zur Pfostenreihe einnehmen kann,
worin das Gerüst (2) Gerüstmodule (20) umfasst, die jeweils von einem Pfosten (1) getragen werden und mindestens einen Ausfahrarm (201d, 201'd, 201g, 201'g) umfassen, der mit dem entsprechenden Pfosten durch seinen proximalen Bereich winkelbeweglich zwischen einer vertikalen und nach oben gerichteten Position, die der eingezogenen Position des Gerüsts entspricht, und einer horizontalen oder in Bezug auf den Boden geneigten Position verbunden ist, die der ausgefahrenen Position des Gerüsts entspricht,
worin das besagte Gerüst (2) zudem mindestens ein seitliches längliches Element (21) umfasst, das an der distalen Zone des oder eines der Ausfahrarme jedes Gerüstmoduls (20) befestigt ist, worin sich das besagte mindestens eine seitliche längliche Element (21) parallel zur Reihe der Pfosten (1) und zum Boden erstreckt,
- eine biegsame Schutzabdeckung (4) mit einer Oberseite und einer Unterseite, worin die Schutzabdeckung (4) von dem Gerüst (2) getragen wird und geeignet ist:
- durch Ausfahren des Gerüsts (2) eine ausgefahrene Position einzunehmen, in der sie sich über die Pflanzen erstreckt und einen Schutzschirm bildet,
- durch Einziehen des Gerüsts (2) eine eingezogene Position über dem oberen Ende der Pflanzenreihe einzunehmen,
- Mittel (3), zum Manövrieren des Gerüsts (2) zwischen der ausgefahrenen und der eingefahrenen Position zu und diesen in der einen oder anderen Position oder in einer Zwischenposition zu halten,
worin die Einrichtung **dadurch gekennzeichnet ist, dass** jedes Gerüstmodul (20) einen Führungskopf (200) umfasst, der zum Führen der Manövriermittel (3) vorgesehen ist, worin jeder Führungskopf (200) an dem entsprechenden Pfosten (1) in einem Abstand über dem proximalen Ende des oder jedes Ausfahrarms (201d, 201g) befestigt ist, **dadurch gekennzeichnet, dass** der oder jeder Ausfahrarm jedes Gerüstmoduls (20) in Richtung der Ausfahrposition des Gerüsts (2) durch elastische Rückstellkräfte innerhalb des oder jedes Ausfahrarms (201g, 201d) vorgespannt ist, worin der letztere aus einem elastischen länglichen Element gebildet ist.

2. Einrichtung nach Anspruch 1, **dadurch gekennzeichnet, dass** der proximale Bereich des oder jedes Ausfahrarms (201g, 201d) als Feder (201a, 201c) mit nicht zusammenhängenden Windungen ausgebildet ist.

3. Einrichtung nach Anspruch 1 oder Anspruch 2, **dadurch gekennzeichnet, dass** das oder jedes seitliche längliche Element (21) durch eine elastisch dehnbare Schnur gebildet ist.

4. Einrichtung nach einem der vorhergehenden Ansprüche, **dadurch gekennzeichnet, dass**:
- die Mittel (3) zum Manövrieren des Gerüsts (2) eine motorisierte Wickelwelle (32) umfassen, auf der die Schutzabdeckung (4) aufgewickelt ist, worin die Welle (32) mit einem Motormittel gekoppelt ist, um sie in Drehung zu versetzen,
- der Führungskopf (200) jedes Gerüstmoduls (20) mit mindestens einem Lagermittel (5) versehen ist, das eine Rolle (32a) trägt, die von der Wickelwelle (32) und dem auf dieser Welle aufgewickelten Teil der Schutzabdeckung (4) gebildet wird, worin letztere mit mindestens einer ihrer beiden Längskanten an einem seitlichen länglichen Element (21) und an Verbindungsprofilen (23) befestigt ist, worin die Welle (32) mit einem Motormittel zu ihrem Drehantrieb verbunden ist.

5. Einrichtung nach einem der vorhergehenden Ansprüche, **dadurch gekennzeichnet, dass**:
- jedes Gerüstmodul (20) mindestens ein Paar von Ausfahrarmen aufweist, die durch einen linken Ausfahrarm (201g) und einen rechten Ausfahrarm (201d) gebildet werden, die einander gegenüberliegen und sich beide in einer geometrischen Querebene senkrecht zur Pfostenreihe erstrecken,
- jeder Ausfahrarm (201d, 201g) mit einem Verbindungsprofil (23) verbunden ist,
- das Gerüstmodul (20) zwei seitliche, längliche Elemente (21), rechts und links, aufweist, und
- die Schutzabdeckung (4) mit ihrem mittleren Längsbereich an der Wickelwelle (32) und mit ihren rechten und linken Längsrändern an den rechten bzw. linken seitlichen länglichen Elementen (21) und an den Verbindungsprofilen (23) befestigt ist, worin die Schutzabdeckung (4) im ausgefahrenen Zustand oberhalb der Pflanzenreihe zwei gegenüberliegende Abdeckungsabschnitte (4a, 4b) bildet.

6. Einrichtung nach einem der vorhergehenden Ansprüche, **dadurch gekennzeichnet, dass** das oder jedes Lagermittel (5) durch mindestens eine untere zentrale Rolle (52) gebildet wird, die drehbar auf einer Achse (52a) montiert ist, die am Führungskopf (200) befestigt ist und sich parallel zur Wickelwelle (32) erstreckt, einen linken seitlichen Anschlag, der von mindestens einer Rolle (53) gebildet wird, die drehbar auf einer Achse (53a) montiert ist, die am Führungskopf (200) befestigt ist und sich parallel zur Wickelwelle (32) erstreckt, einen rechten seitlichen Anschlag, der von mindestens einer Rolle (54) gebildet wird, die drehbar auf einer Achse (54a) montiert ist, die am Führungskopf (200) befestigt ist und sich parallel zur Wickelwelle (32) erstreckt, und einen rechten seitlichen Anschlag, der aus mindestens einer Rolle (54) besteht, die drehbar auf einer Achse (54a) montiert ist, die am Führungskopf (200) befestigt ist und sich parallel zur Wickelwelle (32) erstreckt, einen rechten seitlichen Anschlag, der aus mindestens einer Rolle (54) besteht, die drehbar auf einer Welle (54a) montiert ist, die am Führungskopf (200) befestigt ist und sich parallel zur Wickelwelle (3) erstreckt, und ein Hochschiebesicherungsmittel (6), das aus einer Ausgleichsstruktur (63) besteht, die an der Trägerwelle der oder jeder unteren zentralen Rolle (52) angelenkt ist, und aus mindestens einer Rolle (64) , die durch die Ausgleichsstruktur (63) frei drehbar über der Rolle (32a) gelagert ist, die von der Wickelwelle (32) und dem aufgerollten Teil der Schutzabdeckung (4) gebildet wird.

7. Einrichtung nach dem vorhergehenden Anspruch, **dadurch gekennzeichnet, dass** die Hochschiebesicherungsmittel (6) durch einen auf die Pendelstruktur (63) wirkenden Nockenmechanismus (65) zum linken Seitenanschlag hin oder von diesem weg gedrückt wird.

8. Einrichtung nach Anspruch 4 oder Anspruch 5, **dadurch gekennzeichnet, dass** die Schutzabdeckung (4) segmentiert ist, dass jedes Abdeckungssegment (4c) geeignet ist, ein Feld abzudecken, d.h. dass die Wickelwelle (32) aus Wellenabschnitten (32b) gebildet ist, die an den Lagermitteln (5) durch Kupplungselemente (321) miteinander gekoppelt sind, worin sich jedes Kupplungselement durch die es aufnehmenden Lagermittel (5) hindurch erstreckt, und dass jeder Wellenabschnitt (32b) ein Abdeckungssegment (4c) aufnimmt und mit diesem einen abnehmbaren Wickelrollenabschnitt bildet.

9. Einrichtung nach dem vorhergehenden Anspruch, **dadurch gekennzeichnet, dass**:
- jedes Lagermittel (5) durch ein Lagergehäuse (55) mit einer zylindrischen Durchgangsbohrung, der eine radiale, seitliche, nach oben geneigte Einführöffnung zugeordnet ist, und einen in der Bohrung des Lagergehäuses (55) drehbar gelagerten Drehring (56) gebildet wird,
- der Drehring (56) aus einer zylindrischen Führungsfläche (560), die in der Bohrung des Lagergehäuses (55) drehbar gelagert ist, und aus zwei seitlichen Flanschen (561) in Form von Kreisscheiben besteht, die mit der zylindrischen Fläche verbunden sind und dazu bestimmt sind, auf beiden Seiten des Lagergehäuses vorzustehen,
- der Drehring (56) mit einer Durchgangsbohrung mit demselben Querschnitt wie der jedes Kupplungselements (131) versehen ist, um eines der letzteren aufzunehmen,
- die seitlichen Flansche (561) des Drehrings (56) einen Durchmesser aufweisen, der größer ist als der maximale Durchmesser der Rolle (32a), um benachbarte Abdeckungssegment (4c) vom Lagergehäuse zu beabstanden.

10. Einrichtung nach Anspruch 8 oder Anspruch 9, **dadurch gekennzeichnet, dass** in dem Spalt zwischen zwei aufeinanderfolgenden Feldern mindestens ein rollbares Dichtungsmittel angeordnet ist, das bei teilweiser oder vollständigem Ausfahren der Schutzabdeckung das Eindringen von Regenwasser durch diesen Spalt verhindert.

11. Einrichtung nach dem vorhergehenden Anspruch, **dadurch gekennzeichnet, dass** die demselben Lagermittel (5) zugeordneten Wellenabschnitte (32b) von diesem Lagermittel (5) axial beabstandet sind und dass jedes Dichtungsmittel durch zwei Paare von Dichtungslaschen (42) gebildet ist,) worin die eine den Spalt zwischen den beiden benachbarten linken Flächen der Schutzabdeckung (4) abdeckt und die andere die beiden rechten Flächen abdeckt und teilweise von den genannten Flächen abgedeckt wird, während sie mit den unteren Flächen dieser letzteren in Kontakt steht, worin jede Klappe (42) einerseits an dem mit dem genannten Lagermittel (5) verbundenen Kupplungselement (321) und andererseits an dem entsprechenden Verbindungsprofil (23) befestigt ist.

12. Einrichtung nach dem vorhergehenden Anspruch, **dadurch gekennzeichnet, dass** jedem Paar von Dichtungslaschen (42) ein spezielles Spannelement (43) zugeordnet ist, das in der Lage ist, die beiden Laschen (42) mit ihren Rändern, die ihrem abgerollten Teil zugewandt sind, nahe beieinander und in einer koplanaren Beziehung zu halten, indem es auf ihren oder einen ihrer gegenüberliegenden Ränder (420) und auf ihre oberen und unteren Flächen einwirkt.

13. Einrichtung nach Anspruch 12, **dadurch gekennzeichnet, dass** jedes Dichtungsmittel unter jedem Paar von Dichtungslaschen (42) und in Höhe des Spalts zwischen den beiden Laschen (42) dieses Paars eine Verbindungsdichtungslasche (45) aufweist, die sich zwischen dem Lagermittel (5) und dem entsprechenden Verbindungsprofil (23) erstreckt, worin die Lasche (45) von dem Spannelement (43) getragen wird.)

14. Einrichtung nach einem der vorhergehenden Ansprüche, **dadurch gekennzeichnet, dass** die Mittel (3) zum Manövrieren des Gerüsts (2) ein langsames Falten des Gerüsts und der Schutzabdeckung (4) und ein schnelles Ausfahren der letzteren gewährleisten können.

15. Einrichtung nach einem der vorhergehenden Ansprüche, **dadurch gekennzeichnet, dass**:
- die Wickelwelle (32) rohrförmig ist und axial durch eine rohrförmige Kupplungswelle (323) verlängert wird, über die sie mit dem Drehantriebsmittel gekoppelt ist,
- der Drehantriebsmotor einen Getriebemotor (95) umfasst, der zwei fluchtende, einander gegenüberliegende Abtriebswellen (950) aufweist, die an einem einzigen Rotor mit zwei Drehrichtungen befestigt sind, der dazu bestimmt ist, bei Bedarf mit der Wickelwelle (32) gekoppelt zu werden, und zwar jeweils über ein spezielles Bewegungsgetriebe und einen speziellen Kupplungsmechanismus (98),
- die beiden Bewegungsgetriebe unterschiedlich aufgebaut sind, worin eines der beiden Getriebe geeignet ist, die Welle (32) mit einer hohen Drehzahl in der Ausfahrrichtung der Schutzabdeckung (4) anzutreiben, und das andere, die Welle mit einer niedrigeren Drehzahl in der Faltrichtung der Abdeckung (4) anzutreiben,
- jedes Bewegungsgetriebe ein Antriebsritzel (96) umfasst, das mit der entsprechenden Welle des Getriebemotors verkeilt ist, und ein angetriebenes Ritzel (97) mit einem anderen Durchmesser, das mit der Form der Kupplungswelle (323) verkeilt ist und mit dem Antriebsritzel (96) in Eingriff steht,
- die beiden Kupplungsmechanismen (98) funktionell miteinander verbunden sind, so dass die Aktivierung des einen die Deaktivierung des anderen bewirkt und umgekehrt, worin einer der beiden Kupplungsmechanismen (98) aktiviert wird, wenn sich die beiden Ausgangswellen (950) im Uhrzeigersinn drehen, und der andere Kupplungsmechanismus (98) aktiviert wird, wenn sich die beiden Ausgangswellen (950) gegen den Uhrzeigersinn drehen.

16. Einrichtung nach einem der vorhergehenden Ansprüche, die mehrere durch Zwischenreihen getrennte Reihen umfasst, **dadurch gekennzeichnet, dass**:
- das oder jedes seitliche längliche Element (21) an der Schutzabdeckung (4) durch Eingriff in eine Folge von gleichmäßig beabstandeten Durchgangsbohrungen befestigt ist, die in dem entsprechenden Rand der Schutzabdeckung (4) in einem Abstand von der Längskante dieses Randes ausgeführt sind, worin das seitliche längliche Element (21) abwechselnd einen oberen (21a) und einen unteren (21b) Wulst bildet, die jeweils Vorsprünge auf der Oberseite der Schutzabdeckung (4) und auf der Unterseite dieser letzteren bilden,
- diese Schutznetze umfasst, die mit Haken an den von den seitlichen länglichen Elementen (21) gebildeten Wülsten (21b) befestigt sind, und
- die Schutznetze die Zwischenreihen abdecken, und die Manövriermittel (3) mit einem Ausrückmittel verbunden ist, damit sich die zu einem einzigen Netz gehörenden Gerüste und Abdeckungen unter der Wirkung des Gewichts der auf diesem Netz vorhandenen Schnee- oder Hagelansammlungen entfalten können.

## Claims

1. Plant protection system for plants grown in rows, comprising :
- vertical posts (1) aligned in at least one row, designed to be embedded in the ground, each comprising an upper zone (10) designed to be located above the plant canopy,
- a framework (2) integral with the upper zone (10) of the posts (1), capable of adopting a retracted position or a deployed position transversely perpendicular to the row of posts,
said framework (2) comprising framework modules (20) each carried by a post (1) and comprising at least one deployment arm (201d, 201'd, 201g, 201'g) connected to the corresponding post by its proximal zone in an angularly movable manner, between a vertical and upwardly oriented position corresponding to the retracted position of the framework, and a horizontal or inclined position with respect to the ground corresponding to the deployed position of the framework,
said framework (2) further comprising at least one lateral elongate element (21) fixed to the distal zone of the or one of the deployment arms of each framework module (20), said at least one lateral elongate element (21) extending parallel to the row of posts (1) and to the ground,
- a flexible protective cover (4) having an upper face and a lower face, said protective cover (4) being carried by the framework (2) and being able to occupy :
- by deploying the framework (2), an unfolded position in which it extends over the plants and forms a protective screen,
- by retracting the framework (2), a folded position above the top of the row of plants,
- means (3) for maneuvering the frame (2) between the extended and retracted positions and for holding it in either position or in an intermediate position,
said installation being **characterized in that** each framework module (20) comprises a guide head (200) provided for guiding the maneuvering means (3), each guide head (200) being fixed to the corresponding post (1), at a distance above the proximal end of the or each deployment arm (201d, 201g), **characterized in that** the or each deployment arm of each framework module (20) is biased towards the deployment position of the framework (2) by elastic restoring forces internal to the or each deployment arm (201g, 201d), the latter being formed from an elastic elongate element.

2. Installation according to claim 1, **characterized in that** the proximal zone of the or each deployment arm (201g, 201d) is designed as a spring (201a, 201c) with non-contiguous coils.

3. Installation according to claim 1 or claim 2, **characterized in that** the or each lateral elongated element (21) is formed by an elastically extensible cord.

4. Installation according to any of the preceding claims, **characterized in that** :
- the means (3) for maneuvering the framework (2) comprises a motorized winding shaft (32), on which the protective cover (4) is wound, said shaft (32) being coupled to a motor means for driving it in rotation,
- the guide head (200) of each framing module (20) is provided with at least one bearing means (5) supporting a roller (32a) formed by the winding shaft (32) and the wound-up portion, on this shaft, of the protective cover (4), the latter, by at least one of its two longitudinal edges, being fixed to a lateral elongated element (21) and to connecting profiles (23), said shaft (32) being coupled to a motor means for driving it in rotation.

5. Installation according to any of the preceding claims, **characterized in that** :
- each framework module (20) comprises at least one pair of deployment arms formed by a left deployment arm (201g) and a right deployment arm (201d), opposite each other, both extending in a transverse geometric plane perpendicular to the row of posts,
- each extension arm (201d, 201g) is connected to a connecting profile (23),
- the frame (20) comprises two lateral elongated elements (21), right and left
- the protective cover (4) is fastened by its longitudinal central zone to the winding shaft (32) and by its right and left longitudinal edges respectively to the right and left lateral elongate elements (21) and to the connecting profiles (23), said protective cover (4) forming, above the row of plants, when deployed, two opposite cover sections (4a, 4b).

6. Installation according to one of the preceding claims, **characterized in that** the or each bearing means (5) is formed by at least one lower central roller (52) rotatably mounted on an axle (52a) fixed to the guide head (200) and extending parallel to the winding shaft (32), a left lateral stop formed by at least one roller (53) rotatably mounted on an axle (53a) fixed to the guide head (200) and extending parallel to the winding shaft (32), a right lateral stop formed by at least one roller (54) rotatably mounted on an axle (54a) fixed to the guide head (200) and extending parallel to the winding shaft (32), and a right lateral stop formed by at least one roller (54) rotatably mounted on an axle (54a) fixed to the guide head (200) and extending parallel to the winding shaft (32), a right lateral stop formed by at least one roller (54) rotatably mounted on a shaft (54a) fixed to the guide head (200) extending parallel to the winding shaft (3), and an anti-lift means (6) consisting of a balancing structure (63) articulated to the support shaft of the or each lower central roller (52) and by at least one roller (64) freely rotatably supported, by the balancer structure (63), above the roller (32a) formed by the winding shaft (32) and the rolled-up part of the protective cover (4).

7. Installation according to the preceding claim, **characterized in that** the anti-lift means (6) is urged towards or away from the left lateral stop by a cam mechanism (65) acting on the pendulum structure (63).

8. Installation according to claim 4 or claim 5, **characterized in that** the protective cover (4) is segmented, that each cover segment (4c) is adapted to cover a bay, i.e. the distance between two consecutive posts (1), and that the winding shaft (32) is formed of shaft sections (32b) coupled to one another at the bearing means (5) by coupling members (321), each coupling member extending through the bearing means (5) which accommodates it, and that each shaft section (32b) accommodates a cover segment (4c) and forms with the latter a removable winding roller section.

9. Installation according to the preceding claim, **characterized in that** :
- each bearing means (5) is formed by a bearing housing (55) with a cylindrical through-bore associated with a radial, lateral, upwardly inclined insertion opening and a rotary ring (56) rotatably mounted in the bore of the bearing housing (55),
- the rotating ring (56) is formed by a cylindrical guide surface (560) rotatably mounted in the bore of the bearing housing (55) and by two lateral flanges (561), in the form of circular discs, connected to the cylindrical surface and designed to project on either side of the bearing housing,
- the rotating ring (56) is provided with a through hole of the same cross-section as that of each coupling member (131) to receive one of the latter,
- the lateral flanges (561) of the rotating ring (56) have a diameter greater than the maximum diameter of the roller (32a) in order to distance adjacent cover segments (4c) from the bearing housing.

10. Installation according to claim 8 or claim 9, **characterized in that** at least one rollable sealing means is arranged in the gap between two successive bays, preventing the introduction of rainwater through said gap when the protective cover is partially or fully deployed.

11. Installation according to the preceding claim, **characterized in that** the shaft sections (32b) associated with the same bearing means (5) are axially spaced from this bearing means (5) and that each sealing means is formed by two pairs of sealing flaps (42), one covering the gap between the two adjacent left-hand faces of the protective cover (4) and the other covering the two right-hand faces and being partially covered by the said faces while being in contact with the lower faces of the latter, each flap (42) being fixed, on the one hand, to the coupling member (321) associated with said bearing means (5) and, on the other hand, to the corresponding connecting profile (23).

12. Installation according to the preceding claim, **characterized in that** each pair of sealing flaps (42) is associated with a dedicated tightening element (43) capable of holding the two flaps (42) by their edges facing their unrolled part, close to each other and in a coplanar relationship, by acting on their or one of their opposite edges (420) and on their upper and lower faces.

13. Installation according to claim 12, **characterized in that** each sealing means comprises under each pair of sealing flaps (42) and in line with the gap between the two flaps (42) of said pair, a connecting sealing flap (45), extending between the bearing means (5) and the corresponding connecting profile (23), said flap (45) being carried by the tightening element (43).

14. Installation according to any one of the preceding claims, **characterized in that** the means (3) for maneuvering the framework (2) is able to ensure slow folding of said framework and of the protective cover (4), and rapid deployment of the latter.

15. Installation according to any of the preceding claims, **characterized in that** :
- the winding shaft (32) is tubular, and is extended axially by a tubular coupling shaft (323), by means of which it is coupled to the rotary drive motor means,
- the rotary drive motor means comprises a geared motor (95) having two aligned, opposed output shafts (950) fixed to a single rotor with two directions of rotation, adapted to be coupled on demand to the winding shaft (32), each by a dedicated motion transmission and by a dedicated clutch mechanism (98),
- the two motion transmissions are different in design, one of the two transmissions being suitable for driving the shaft (32) at a high rotational speed in the direction of deployment of the protective cover (4), and the other for driving the shaft at a lower rotational speed in the direction of folding of the cover (4),
- each motion transmission comprises a driving pinion (96) keyed to the corresponding shaft of the geared motor, a driven pinion (97) of different diameter, keyed to the shape of the coupling shaft (323), and meshed with the driving pinion (96),
- the two clutch mechanisms (98) are functionally associated with each other so that activation of one causes deactivation of the other and vice versa, one of the two clutch mechanisms (98) being activated when rotation of the two output shafts (950) is clockwise, the other clutch mechanism (98) being activated when rotation of the two output shafts (950) is counterclockwise.

16. Installation according to any one of the preceding claims, comprising several rows separated by inter-rows, **characterized in that** :
- the or each lateral elongate element (21) is fixed to the protective cover (4) by engagement in a succession of equidistant through bores made in the corresponding edge of the protective cover (4), at a distance from the longitudinal edge of this edge, the said lateral elongate element (21) forming an alternation of upper (21a) and lower (21b) beads, respectively forming projections on the upper face of the protective cover (4) and on the lower face of the latter,
- it includes protective nets attached by hooks to the beads (21b) formed by the lateral elongated elements (21),
- the protective nets cover the inter-rows, and the manoeuvring means (3) is associated with a disengaging means so that the frames and covers associated with a single net can unfold under the effect of the weight of accumulations of snow or hail present on this net.
